# EUROPEAN PATENT SPECIFICATION

(11) **EP 3 813 329 B1**
(45) Date of publication and mention of the grant of the patent: **17.09.2025**
(21) Application number: 20202154.9
(22) Date of filing: 15.10.2020
(51) Int. Cl.: H04L 9/40, H04L 47/70

(54) **METHOD, APPARATUS AND COMPUTER PROGRAM PRODUCT FOR INTEGRATING AND MANAGING AUTOMATED DATAFLOW SYSTEMS**
VERFAHREN, VORRICHTUNG UND COMPUTERPROGRAMMPRODUKT ZUM INTEGRIEREN UND VERWALTEN AUTOMATISIERTER DATENFLUSS SYSTEME
PROCÉDÉ, APPAREIL ET PRODUIT DE PROGRAMME INFORMATIQUE POUR INTÉGRER ET GÉRER DES SYSTÈMES AUTOMATISÉS DE FLUX DE DONNÉES

(30) Priority: 24.10.2019 US 201916663039
(43) Date of publication of application: 28.04.2021
(73) Proprietor: Honeywell International Inc., Charlotte, NC 28202 (US)
(72) Inventor: XIE, Jialun, Charlotte, NC North Carolina 28202 (US); YAO, Huanchu, Charlotte, NC North Carolina 28202 (US)
(74) Representative: Houghton, Mark Phillip

(56) References cited:
- US-A1- 2014 380 405
- US-A1- 2019 114 350
- No Search

## Description

### FIELD OF THE INVENTION

The present disclosure relates generally to methods, apparatuses, and systems associated with automated dataflow systems, and more particularly, to methods, apparatuses, and systems for integrating and managing automated dataflow systems.

### BACKGROUND

Many systems and methods do not overcome technical challenges and difficulties associated with utilizing or integrating automated dataflow systems. For example, many systems do not have the capability to manage organization scope of dataflow within the automated dataflow system, and do not provide dataflow version control. As another example, many methods do not require authorization to access automated dataflow systems, and do not monitor the status of dataflow, resulting in potential security risks for data management. As yet another example, many systems lack scaling capability, and do not provide an interface for continuous integration and continuous delivery (CI/CD) with an automated dataflow system.

An example of a currently used system can be found in US2019/114350A1, which discloses systems, methods, and apparatuses for implementing concurrent dataflow execution with write conflict protection within a cloud based computing environment. For instance, an exemplary system having at least a processor and a memory therein includes means for: creating a dataflow definition for a first dataflow type, wherein the dataflow definition includes at least one or more datasets to be accessed by the dataflow and a plurality of functional operations to be performed on the one or more datasets when the dataflow is executed; generating and storing a dataflow version identifying all datasets accessed by the dataflow based on the dataflow definition created; receiving multiple requests for the first dataflow type; enqueuing the multiple requests into a message queue pending execution; selecting, from the message queue, a first runnable dataflow having been earliest enqueued of the first dataflow type for execution based on (i) the first dataflow type being allowable within system limits and based further on (ii) verification that the selected first runnable dataflow is not already executing and based further on (iii) verification there is no write conflict for any dataset accessed by the selected first runnable dataflow.

### BRIEF SUMMARY

The claimed invention is as defined in the appended claims

In accordance with various examples, an apparatus may be provided. The apparatus may comprise at least one processor and at least one non-transitory memory comprising program code. The at least one non-transitory memory and the program code may be configured to, with the at least one processor, cause the apparatus to at least: receive a dataflow request from a tenant device; retrieve dataflow data associated with a plurality of instances from a flow and status registry; and determine a selected instance from the plurality of instances based on a plurality of status indicators. In some examples, the dataflow data may comprise a plurality of instance locators and a plurality of status indicators associated with the plurality of instance locators.

In some examples, the dataflow request may indicate an electronic request to deploy a dataflow.

In some examples, the dataflow data may be NiFi dataflow data. In some examples, the plurality of instances may be a plurality of NiFi instances. In some examples, the plurality of instance locators may be a plurality of NiFi instance locators. In some examples, the plurality of status indicators may be a plurality of NiFi status indicators. In some examples, the selected instance may be a selected NiFi instance.

In some examples, the at least one non-transitory memory and the program code may be configured to, with the at least one processor, cause the apparatus to further: convert the dataflow request to a deployment request based at least on the selected instance; and transmit the deployment request to the selected instance.

In some examples, an instance locator of the plurality of instance locators may comprise a network address of one of the plurality of instances.

In some examples, a status indicator of the plurality of status indicators may comprise a network resource consumption rate associated with one of the plurality of instances. In some examples, determining the selected instance from the plurality of instances may be based on the plurality of status indicators.

In some examples, the dataflow data retrieved from the flow and status registry further may comprise at least one dataflow content descriptor and at least one dataflow version indicator. In some examples, when determining the selected instance from the plurality of instances, the at least one non-transitory memory and the program code may be configured to, with the at least one processor, cause the apparatus to further determine whether the dataflow associated with the dataflow request is a higher version of an existing dataflow in the plurality of instances based at least on the at least one dataflow content descriptor and the at least one dataflow version indicator.

In some examples, the at least one non-transitory memory and the program code may be configured to, with the at least one processor, cause the apparatus to further: determine that the dataflow is the higher version of the existing dataflow; and cause the selected instance to replace the existing dataflow with the dataflow.

In some examples, the at least one non-transitory memory and the program code may be configured to, with the at least one processor, cause the apparatus to: receive a tenant onboarding request from an operation maintenance device; and generate tenant profile data in a tenant registry based on the tenant onboarding request. In some examples, the tenant profile data may comprise a tenant identifier, an authorization indicator, and/or a quota indicator.

In some examples, the tenant identifier may be associated with a tenant device.

In some examples, the authorization indicator may comprise at least one instance identifier associated with at least one instance of the plurality of instances. In some examples, the dataflow may be authorized to be deployed in the at least one instance.

In some examples, the quota indicator may indicate a number of instances associated with the tenant identifier.

In some examples, the at least one non-transitory memory and the program code may be configured to, with the at least one processor, cause the apparatus to further: receive a tenant termination request from an operation maintenance device, wherein the tenant termination request may comprise a tenant identifier; and remove tenant profile data corresponding to the tenant identifier from a tenant registry based on the tenant termination request.

In some examples, the at least one non-transitory memory and the program code may be configured to, with the at least one processor, cause the apparatus to further: retrieve tenant profile data associated with the tenant device from a tenant registry, wherein the tenant profile data may comprise an authorization indicator; and determine at least one authorized instance based on the authorization indicator. In some examples, the selected instance may be determined from the at least one authorized instance.

In some examples, the at least one non-transitory memory and the program code may be configured to, with the at least one processor, cause the apparatus to further: retrieve tenant profile data associated with the tenant device from a tenant registry. In some examples, the tenant profile data may comprise a quota indicator, and determining the selected instance from the plurality of instances may be based on the quota indicator.

In some examples, the at least one non-transitory memory and the program code may be configured to, with the at least one processor, cause the apparatus to further: retrieve at least one monitoring probe status indicator from a scheduler registry; and update the dataflow data based on the at least one monitoring probe status indicator. In some examples, the at least one monitoring probe status indicator may indicate at least one current monitoring probe associated with the plurality of instances.

In some examples, the at least one non-transitory memory and the program code may be configured to, with the at least one processor, cause the apparatus to further: retrieve at least one historical probe status indicator from a scheduler registry, wherein the at least one historical probe status indicator may indicate at least one result of at least one historical monitoring probe associated with the plurality of instances; and generate prediction data associated with the plurality of instances based on the at least one historical probe status indicator.

In accordance with various examples, a computer-implemented method may be provided. The computer-implemented method may comprise: receiving a dataflow request from a tenant device; retrieving dataflow data associated with a plurality of instances from a flow and status registry; determining a selected instance from the plurality of instances based on the dataflow data; converting the dataflow request to a deployment request based at least on the selected instance; and transmitting the deployment request to the selected instance.

In accordance with various examples, a computer program product may be provided. The computer program product may comprise at least one non-transitory computer-readable storage medium having computer-readable program code portions stored therein. The computer-readable program code portions may comprise an executable portion that is configured to: receive a dataflow request from a tenant device; retrieve dataflow data associated with a plurality of instances from a flow and status registry; determine a selected instance from the plurality of instances based on the dataflow data; convert the dataflow request to a deployment request based at least on the selected instance; and transmit the deployment request to the selected instance.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 illustrates an example schematic diagram of an example system in accordance with various embodiments of the present disclosure;
FIG. 2 illustrates an example block diagram of an example apparatus in accordance with various embodiments of the present disclosure;
FIG. 3 illustrates an example schematic diagram of an example system in accordance with various embodiments of the present disclosure;
FIG. 4 illustrates an example flow diagram in accordance with various embodiments of the present disclosure;
FIG. 5 illustrates an example flow diagram in accordance with various embodiments of the present disclosure;
FIG. 6 illustrates an example schematic diagram of an example system in accordance with various embodiments of the present disclosure;
FIG. 7A illustrates an example flow diagram in accordance with various embodiments of the present disclosure;
FIG. 7B illustrates an example flow diagram in accordance with various embodiments of the present disclosure;
FIG. 8 illustrates an example schematic diagram of an example system in accordance with various embodiments of the present disclosure;
FIG. 9 illustrates an example flow diagram in accordance with various embodiments of the present disclosure; and
FIG. 10 illustrates an example flow diagram in accordance with various embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

The phrases "in one embodiment," "according to one embodiment," "for example," "in some examples," "as an example," and the like generally mean that the particular feature, structure, or characteristic following the phrase may be included in at least one embodiment of the present disclosure, and may be included in more than one embodiment of the present disclosure (such phrases do not necessarily refer to the same embodiment).

The word "example" or "exemplary" is used herein to mean "serving as an example, instance, or illustration." Any implementation described herein as "example" or "exemplary" is not necessarily to be construed as preferred or advantageous over other implementations.

If the specification states a component or feature "may," "can," "could," "should," "would," "preferably," "possibly," "typically," "optionally," "for example," "in some examples," "often," or "might" (or other such language) be included or have a characteristic, that a specific component or feature is not required to be included or to have the characteristic. Such component or feature may be optionally included in some embodiments, or it may be excluded.

The term "circuitry" should be understood broadly to include hardware and, in some embodiments, software for configuring the hardware. With respect to components of the apparatus, the term "circuitry" as used herein should therefore be understood to include particular hardware configured to perform the functions associated with the particular circuitry as described herein. For example, in some embodiments, "circuitry" may include processing circuitry, storage media, network interfaces, input/output devices, and the like.

The term "electronically coupled," "electronically coupling," "electronically couple," "in communication with," "in electronic communication with," or "connected" in the present disclosure refers to two or more components (for example but not limited to, tenant devices, operation maintenance devices, the integration and management system, registries, automated dataflow servers) being connected through wired means (for example but not limited to, wired Ethernet) and/or wireless means (for example but not limited to, Wi-Fi, Bluetooth, ZigBee), such that data and/or information may be transmitted to and/or received from these components.

The term "automated dataflow system" or "automated dataflow circuitry" refers to a system or circuitry that may automate the dataflow between software systems. For example, an automated dataflow system or an automated dataflow circuitry may acquire and deliver data across different enterprise systems in real time. As another example, an automated dataflow system or an automated dataflow circuitry may be implemented in an Internet of Things (IoT) system to process and/or distribute data to/from computing devices, mechanical machines and/or digital machines that are interrelated within the IoT system.

Example automated dataflow systems may include, but is not limited to, "NiFi" or "NiagaraFiles" system. While the present disclosure may include reference to NiFi systems, it is noted that the scope of the present disclosure is not limited to NiFi only, and example embodiments may be implemented in association with other automated dataflow systems.

The term "dataflow" refers to movement of data within and/or through a system comprising of software means, hardware means, or both.

The term "instance" refers to a processing engine that may be configured to process or run one or more dataflows. To cause the instance to process or run a dataflow, the dataflow may be "deployed" to the instance by a computing device. For example, a "NiFi instance" may refer to a processing engine that is designed based on NiFi.

The term "dataflow data" refers to data or information related to dataflow that is processed or run by an instance. An example dataflow data may include, but not limited to, the location of the dataflow (such as an instance locator that indicates the instance running the dataflow), the status of the dataflow (such as a status indicator that indicates the status of the dataflow), the content of the dataflow, and/or the version of the dataflow.

In some examples, an instance may have a corresponding "instance identifier," which may comprise an American Standard Code for Information Interchange (ASCII) text, a pointer, a memory address, and the like, and may uniquely identify the instance from a plurality of instances. In some examples, two or more instances may be interconnected to process or run dataflow, such that they may form an "instance cluster" and be viewed as a single system.

An instance and/or an instance cluster may be implemented through software means, hardware means, or a combination of both. For example, an "automated dataflow server" may be a computing device that may execute one or more instances and/or one or more instance clusters. In some examples, an automated dataflow server may be a cloud server that may run in a cloud computing environment, and may be in communication with the integration and management system.

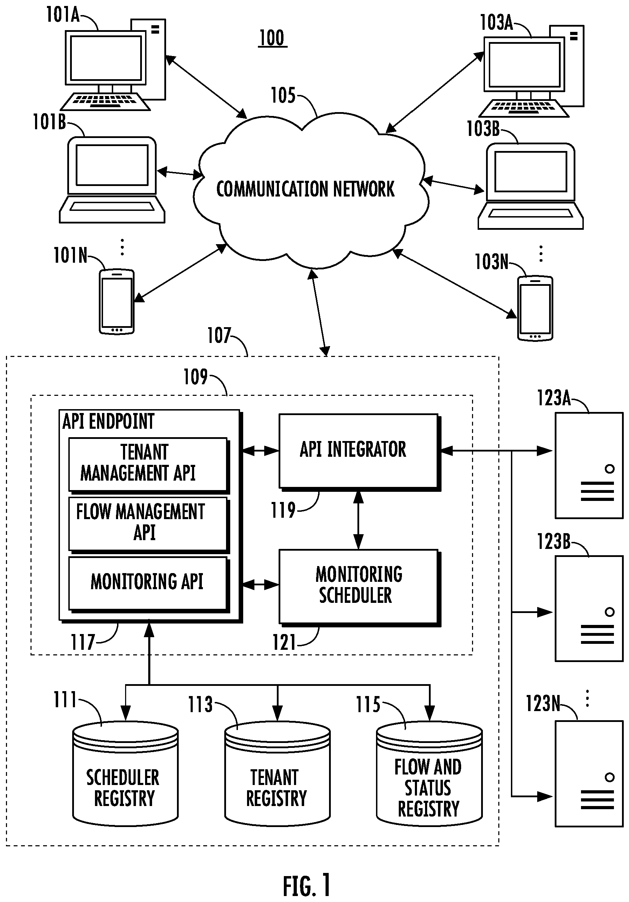

The term "integration and management system" refers to a system or virtual environment that may be configured to manage one or more automated dataflow servers, and/or may integrate one or more automated dataflow servers into other computer networks. The integration and management system may take the form of one or more central servers disposed in communication with one or more additional servers running software applications, and having access to one or more databases storing digital content items, application-related data, and/or the like. An example integration and management system is described at least in connection with FIG. 1 herein.

In some examples, various electronic requests may be transmitted to and/or received from the integration and management system. For example, a "dataflow request" may indicate a request to deploy a dataflow, a "tenant onboarding request" may indicate a request to add a new tenant to the system, a "tenant termination request" may indicate a request to remove an existing tenant from the system, and a "deployment request" may indicate a request to deploy a dataflow in an instance. Additional example details of these requests are described herein.

The term "user" should be understood to refer to an individual, group of individuals, business, organization, and the like. The users referred to herein may access an integration and management system using tenant devices and/or operation maintenance devices (as defined herein).

In some examples, a user may be a tenant of the integration and management system. A "tenant" is a user who may use the integration and management system to deploy one or more dataflows associated with the tenant in one or more automated dataflow servers. The term "tenant device" refers to computer hardware and/or software that is configured to access the integration and management system. Tenant devices may include, without limitation, smart phones, tablet computers, laptop computers, wearables, personal computers, enterprise computers, and the like.

In some examples, a user may be an operation manager of the integration and management system. An "operation manager" is a user who may manage and monitor the integration and management of one or more automated dataflow servers. An operation manager may perform operation management operations on the integration and management system using an "operation maintenance device," which refers to computer hardware and/or software that is configured to access the integration and management system. Operation maintenance devices may include, without limitation, smart phones, tablet computers, laptop computers, wearables, personal computers, enterprise computers, and the like.

The term "registry" refers to a structured and/or organized set of data that is generally stored and accessible electronically from a computer system. For example, a "flow and status registry" may store dataflow data, a "tenant registry" may store tenant profile data, and a "scheduler registry" may store monitoring probe data. Additional example details of these registries are described herein.

As described above, many systems and methods do not overcome technical challenges and difficulties associated with automated dataflow systems, such as NiFi systems. For example, many systems lack the capability to manage the scope of dataflow and the dataflow version. As another example, many methods do not provide user authorization control or status alert.

In contrast, various examples in accordance with the present disclosure may overcome these challenges and difficulties. In some examples, an integration and management system may be provided to manage one or more automated dataflow servers, and/or may integrate one or more automated dataflow servers into other computer networks. The integration and management system may provide the capability to manage the scope of dataflow and the dataflow version, and may provide user authorization control and status alert. As such, examples of the present disclosure may provide scaling capability for data processing.

Methods, apparatuses, and computer program products of the present disclosure may be embodied by any of a variety of devices. For example, the method, apparatus, and computer program product of an example embodiment may be embodied by a networked device (*e.g.,* an integration and management system), such as a server or other network entity, configured to communicate with one or more devices, such as one or more tenant devices, one or more operation maintenance devices, and/or one or more automated dataflow servers. Additionally, or alternatively, the computing device may include fixed computing devices, such as a personal computer or a computer workstation. Additionally, or alternatively, example embodiments may be embodied by any of a variety of mobile devices, such as a portable digital assistant (PDA), mobile telephone, smartphone, laptop computer, tablet computer, wearable, or any combination of the aforementioned devices.

FIG. 1 illustrates an example system architecture 100 within which embodiments of the present disclosure may operate. Users may access an integration and management system 107 via a communication network 105 using tenant devices 101A, 101B, . . . 101N and/or operation maintenance devices 103A, 103B, ... 103N.

The tenant devices 101A-101N may be any computing device as defined above. Electronic data received by the integration and management system 107 from the tenant devices 101A-101N may be provided in various forms and via various methods. For example, the tenant devices 101A-101N may include desktop computers, laptop computers, smartphones, netbooks, tablet computers, wearables, and the like. In some examples, one or more of the tenant devices 101A-101N may each be assigned to a tenant device identifier that uniquely identifies the tenant device. In some examples, the tenant device identifier may comprise an ASCII text, a pointer, a memory address, and the like.

In embodiments where a tenant device of tenant devices 101A-101N is a mobile device, such as a smart phone or tablet, the tenant device may execute an "app" to interact with the integration and management system 107. Such apps are typically designed to execute on mobile devices, such as tablets or smartphones. For example, an app may be provided that executes on mobile device operating systems such as iOS^{®}, Android^{®}, or Windows^{®}. These platforms typically provide frameworks that allow apps to communicate with one another and with particular hardware and software components of mobile devices. For example, the mobile operating systems named above each provide frameworks for interacting with location services circuitry, wired and wireless network interfaces, user contacts, and other applications. Communication with hardware and software modules executing outside of the app is typically provided via Application Programming Interfaces (APIs) provided by the mobile device operating system. In some examples, the app may provide a user interface that allows a user to interact with the integration and management system 107.

Additionally, or alternatively, the tenant devices 101A-101N may interact with the integration and management system 107 via a web browser. Additionally, or alternatively, the tenant devices 101A-101N may include various hardware or firmware designed to interface with the integration and management system 107.

The operation maintenance devices 103A-103N may be any computing device as defined above. Electronic data received by the integration and management system 107 from the operation maintenance devices 103A-103N may be provided in various forms and via various methods. For example, the operation maintenance devices 103A-103N may include desktop computers, laptop computers, smartphones, netbooks, tablet computers, wearables, and the like. In some examples, one or more of the operation maintenance devices 103A-103N may each be assigned to an operation maintenance device identifier that uniquely identifies the operation maintenance device. In some examples, the operation maintenance device identifier may comprise an ASCII text, a pointer, a memory address, and the like.

In embodiments where an operation maintenance device of operation maintenance devices 103A-103N is a mobile device, such as a smart phone or tablet, the operation maintenance device may execute an "app" to interact with the integration and management system 107. Such apps are typically designed to execute on mobile devices, such as tablets or smartphones. For example, an app may be provided that executes on mobile device operating systems such as iOS^{®}, Android^{®}, or Windows^{®}. These platforms typically provide frameworks that allow apps to communicate with one another and with particular hardware and software components of mobile devices. For example, the mobile operating systems named above each provide frameworks for interacting with location services circuitry, wired and wireless network interfaces, user contacts, and other applications. Communication with hardware and software modules executing outside of the app is typically provided via APIs provided by the mobile device operating system. In some examples, the app may provide a user interface that allows a user to interact with the integration and management system 107.

Additionally, or alternatively, the operation maintenance devices 103A-103N may interact with the integration and management system 107 via a web browser. Additionally, or alternatively, the operation maintenance devices 103A-103N may include various hardware or firmware designed to interface with the integration and management system 107.

The communication network 105 may include one or more wired or wireless communication networks including, for example, a wired or wireless local area network (LAN), personal area network (PAN), metropolitan area network (MAN), wide area network (WAN), or the like, as well as any hardware, software and/or firmware required to implement the one or more networks (such as, for example, network routers). For example, the communication network 105 may include general packet radio service (GPRS) network, Code Division Multiple Access 2000 (CDMA2000) network, Wideband Code Division Multiple Access (WCDMA) network, Global System for Mobile Communications (GSM) network, Enhanced Data rates for GSM Evolution (EDGE) network, Time Division-Synchronous Code Division Multiple Access (TD-SCDMA) network, Long Term Evolution (LTE) network, High Speed Packet Access (HSPA) network, High-Speed Downlink Packet Access (HSDPA) network, IEEE 802.11 (Wi-Fi), Wi-Fi Direct, and/or IEEE 802.16 (WiMAX). Additionally, or alternatively, the communication network 105 may include a public network (such as the Internet), a private network (such as an intranet), or combinations thereof.

In some examples, the communication network 105 may utilize networking protocols including, but not limited to, Hypertext Transfer Protocol (HTTP) protocol, HTTP/REST protocol, one or more Transmission Control Protocol/Internet Protocol (TCP/IP) based networking protocols, Near Field Communication (NFC) protocols, Bluetooth protocols, and/or ZigBee protocols. For instance, the networking protocol may be customized to suit the needs of the integration and management system 107. In some embodiments, the protocol is a custom protocol of JSON objects sent via a Websocket channel. In some embodiments, the protocol is JSON over RPC, JSON over REST/HTTP, and the like.

In various embodiments of the present disclosure, one or more electronic requests may be sent to the integration and management system 107, including, but not limited to, tenant onboarding requests, dataflow requests, and/or tenant termination requests. In some examples, these electronic requests may be in the form of HTTP requests.

In some examples, these electronic requests may be sent to the integration and management system 107 over the communication network 105 directly by a tenant device of tenant devices 101A-101N and/or an operation maintenance device of the operation maintenance devices 103A-103N. Additionally, or alternatively, the electronic requests may be sent to the integration and management system 107 via an intermediary.

Referring back to FIG. 1, the integration and management system 107 may comprise an integration and management server 109 and one or more registries, such as but not limited to a scheduler registry 111, a tenant registry 113, and/or a flow and status registry 115. In some examples, the scheduler registry 111, the tenant registry 113, and/or the flow and status registry 115 may be integrated within the integration and management server 109, such that the scheduler registry 111, the tenant registry 113, and/or the flow and status registry 115 may be part of the integration and management server 109.

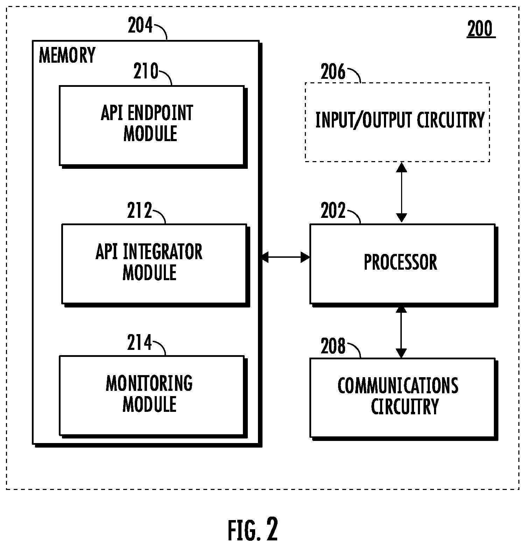

In some examples, the integration and management server 109 may be embodied as a computing device described above. For example, the integration and management server 109 may comprise at least one processor and at least one non-transitory memory storing computer program instructions. These computer program instructions may direct the integration and management server 109 to function in a particular manner, such that the instructions stored in the at least one non-transitory memory may produce an article of manufacture, the execution of which may implement embodiments of the present disclosure. As such, in some examples of the present disclosure, the integration and management server 109 may comprise an API endpoint 117, an API integrator 119, and/or a monitoring scheduler 121. An example diagram illustrating various components of the integration and management server 109 is illustrated and described in connection with at least FIG. 2.

In some examples, the API endpoint 117 may be configured to receive and/or process data and/or information received from other devices, including but not limited to tenant devices 101A-101N and/or operation maintenance devices 103A-103N. For example, the API endpoint 117 may receive a tenant onboarding request and/or a tenant termination request from an operation maintenance device of operation maintenance devices 103A-103N, and/or a dataflow request from a tenant device of tenant devices 101A-101N. In some examples, the API endpoint 117 may be implemented in accordance with the Representational State Transfer (REST) framework. In some examples, the API endpoint 117 may be implemented in accordance with the Simple Object Access Protocol (SOAP) framework.

In some examples, the API endpoint 117 may comprise one or more endpoints of application programming interface(s), such as, but not limited to, a tenant management API, a flow management API, and/or a monitoring API. In some examples, the API endpoint 117 may be configured to receive and/or process data and/or information via these application programming interfaces. Example implementations of these application programming interfaces are described herein.

In some examples, the API integrator 119 may be configured to process and/or integrate data and/or information to generate electronic requests that are in compliance with an automated dataflow API of an automated dataflow server. For example, the API integrator 119 may convert and/or translate a dataflow request (for example, received from a tenant device of tenant devices 101A-101N) to a deployment request based on the API of the corresponding automated dataflow systems. In some examples, the API integrator 119 may transmit the deployment request to one or more automated dataflow servers, such as, but not limited to, automated dataflow servers 123A, 123B, ... 123N as shown in FIG. 1. In some examples, one or more automated dataflow servers may be NiFi servers that may comprise one or more NiFi instances and/or NiFi clusters. In such examples, the API integrator may be a NiFi API integrator, which may convert the dataflow request to a deployment request based on the NiFi API.

In some examples, the monitoring scheduler 121 may be configured to manage one or more monitoring probes for one or more automated dataflow servers, such as, but not limited to, automated dataflow servers 123A-123N as shown in FIG. 1. In some examples, the monitoring scheduler 121 may update dataflow data stored in the flow and status registry 115 based on the results of the monitoring probes, details of which are described herein.

It is noted that various components in the integration and management server 109 may leverage the same computer or computing apparatus to perform the above-described operations. For example, the API endpoint 117, the API integrator 119, and/or the monitoring scheduler 121 may leverage the same processor or memory to perform these functions. In some examples, the API endpoint 117, the API integrator 119, and/or the monitoring scheduler 121 may utilize separated circuitries.

Referring back to FIG. 1, the scheduler registry 111, the tenant registry 113, and/or the flow and status registry 115 may be embodied as one or more data storage devices such as a Network Attached Storage (NAS) device or devices, or as a separate server or servers. The scheduler registry 111, the tenant registry 113, and/or the flow and status registry 115 may include data and/or information accessible to the integration and management server 109.

In some examples, the scheduler registry 111 may store monitoring probe data. The term "monitoring probe" refers to a software operation that may monitor and/or collect data related to status and/or activity of a network system. In some examples, the monitoring probe data may comprise one or more monitoring probe status indicators and/or one or more historical probe status indicators. The monitoring probe status indicators may comprise an ASCII text, a pointer, a memory address, and the like, which may indicate current monitoring probes in one or more automated dataflow servers, such as, but not limited to, automated dataflow servers 123A-123N as shown in FIG. 1. The historical probe status indicators may comprise an ASCII text, a pointer, a memory address, and the like, and may indicate the results of historical probes of one or more automated dataflow servers.

In some examples, the tenant registry 113 may store tenant profile data. In some examples, the tenant profile data may comprise one or more tenant identifiers, one or more authorization indicators, and/or one or more quota indicators. In some examples, the tenant identifiers may comprise an ASCII text, a pointer, a memory address, and the like, which may indicate a tenant associated with the integration and management server 109. In some examples, the authorization indicators may comprise an ASCII text, a pointer, a memory address, and the like, which may indicate which automated dataflow server(s) and/or instance(s) that each tenant has access to (i.e. "authorized instance(s)"). In some examples, the quota indicators may comprise an ASCII text, a pointer, a memory address, and the like, which may indicate the dataflow limit(s) assigned to each tenant.

In some examples, the flow and status registry 115 may store dataflow data. In some examples, the dataflow data may comprise one or more instance locators, one or more status indicators, one or more dataflow content descriptors, and/or one or more dataflow version indicators. In some examples, the instance locators may comprise an ASCII text, a pointer, a memory address, and the like, which may indicate the network location(s) of one or more instances running in one or more automated dataflow servers, such as, but not limited to, automated dataflow servers 123A-123N as shown in FIG. 1. In some examples, the status indicators may comprise an ASCII text, a pointer, a memory address, and the like, which may indicate the status of each instance running in one or more automated dataflow servers, such as, but not limited to, automated dataflow servers 123A-123N as shown in FIG. 1. In some examples, the dataflow content descriptors may comprise an ASCII text, a pointer, a memory address, and the like, which may describe the content of dataflow in one or more automated dataflow servers, such as, but not limited to, automated dataflow servers 123A-123N as shown in FIG. 1. In some examples, the dataflow version indicators may comprise an ASCII text, a pointer, a memory address, and the like, which may indicate the version of dataflow in one or more automated dataflow servers, such as, but not limited to, automated dataflow servers 123A-123N as shown in FIG. 1.

It is noted that the scheduler registry 111, the tenant registry 113, and/or the flow and status registry 115 may leverage the same computer or computing apparatus to perform the above-described operations. In some examples, the scheduler registry 111, the tenant registry 113, and the flow and status registry 115 may utilize separated circuitries.

Referring back to FIG. 1, one or more automated dataflow servers may be in electronic communication with the integration and management system 107. For example, the API integrator 119 of the integration and management server 109 may transmit electronic requests to and receive data from the automated dataflow servers 123A-123N.

In some examples, each of the automated dataflow servers 123A-123N may comprise one or more instances. As described above, an instance is a software engine that may process one or more dataflows. In some examples, two or more instances may be interconnected to process dataflow, such that they may form an "instance cluster" and be viewed as a single system. In some examples, each node in an instance cluster is an instance or another instance cluster.

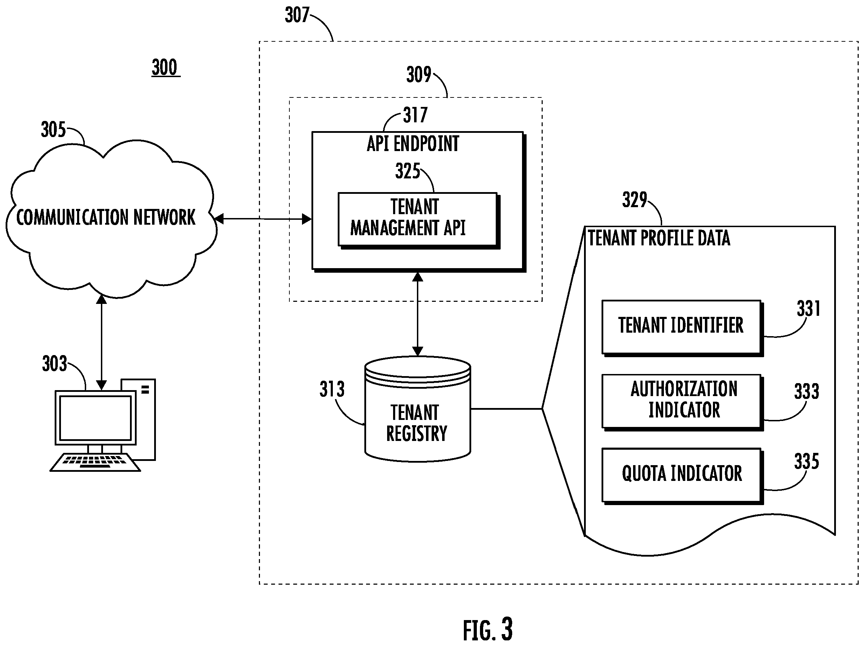

The integration and management server 109 of FIG. 1 may be embodied by one or more computing systems, such as apparatus 200 as shown in FIG. 2. The apparatus 200 may include a processor 202, a memory 204, an input/output circuitry 206, and/or a communications circuitry 208. The apparatus 200 may be configured to execute the operations described above with respect to FIG. 1 and below with respect to FIGS. 3-10.

Although these components are described with respect to functional limitations, it should be understood that the particular implementations necessarily include the use of particular hardware. It should also be understood that certain of these components may include similar or common hardware. For example, two sets of circuitries may both leverage use of the same processor, network interface, storage medium, or the like to perform their associated functions, such that duplicate hardware is not required for each set of circuitries.

In some embodiments, the processor 202 (and/or co-processor or any other processing circuitry assisting or otherwise associated with the processor) may be in communication with the memory 204 via a bus for passing information among components of the apparatus. The memory 204 is non-transitory and may include, for example, one or more volatile and/or non-volatile memories. In other words, for example, the memory 204 may be an electronic storage device (*e.g.,* a computer-readable storage medium). The memory 204 may be configured to store information, data, content, applications, instructions, or the like for enabling the apparatus to carry out various functions in accordance with example embodiments of the present disclosure.

In the example as shown in FIG. 2, the memory 204 may store computer program instructions that may comprise an API endpoint module 210, an API integrator module 212, and/or a monitoring module 214. When the API endpoint module 210 is executed by the processor 202, the apparatus 200 may be configured to receive and/or process data and/or information from other devices, including but not limited to tenant devices and/or operation maintenance devices, similar to the API endpoint 117 described above in connection with FIG. 1. When the API integrator module 212 is executed by the processor 202, the apparatus 200 may be configured to process and/or integrate data and/or information to generate electronic requests that are in compliance with the API of the automated dataflow system, similar to the API integrator 119 described above in connection with FIG. 1. When the monitoring module 214 is executed by the processor 202, the apparatus 200 may be configured to manage one or more monitoring probes for one or more automated dataflow servers, similar to the monitoring scheduler 121 described above in connection with FIG. 1.

Additionally, or alternatively, the apparatus 200 may include one or more designated hardware configured for the API endpoint module 210, the API integrator module 212, and/or the monitoring module 214. For example, the apparatus 200 may include a separate processor, specially configured Field Programmable Gate Array (FPGA), or Application Specific Integrated Circuit (ASIC) that are configured to perform the functions of the API endpoint module 210, the API integrator module 212, and/or the monitoring module 214.

Referring back to FIG. 2, the processor 202 may be embodied in a number of different ways and may, for example, include one or more processing devices configured to perform independently. In some examples, the processor 202 may include one or more processors configured in tandem via a bus to enable independent execution of instructions, pipelining, and/or multithreading. The use of the term "processor" or "processing circuitry" may be understood to include a single core processor, a multi-core processor, multiple processors internal to the apparatus, and/or remote or "cloud" processors.

As described above, the processor 202 may be configured to execute instructions stored in the memory 204 or otherwise accessible to the processor 202. In some preferred and non-limiting embodiments, the processor 202 may be configured to execute hard-coded functionalities. As such, whether configured by hardware or software methods, or by a combination thereof, the processor 202 may represent an entity (*e.g.,* physically embodied in circuitry) capable of performing operations according to an embodiment of the present disclosure while configured accordingly. Alternatively, as another example, when the processor 202 is embodied as an executor of software instructions, the instructions may specifically configure the processor 202 to perform the algorithms and/or operations described herein when the instructions are executed.

The communications circuitry 208 may be any means such as a device or circuitry embodied in either hardware or a combination of hardware and software that is configured to receive and/or transmit data from/to a network and/or any other device, circuitry, or module in communication with the apparatus 200. In this regard, the communications circuitry 208 may include, for example, a network interface for enabling communications with a wired or wireless communication network (such as the communication network 105 described above in connection with FIG. 1). For example, the communications circuitry 208 may include one or more network interface cards, antennae, buses, switches, routers, modems, and supporting hardware and/or software, or any other device suitable for enabling communications via a network. Additionally, or alternatively, the communications circuitry 208 may include the circuitry for interacting with the antenna/antennae to cause transmission of signals via the antenna/antennae or to handle receipt of signals received via the antenna/antennae.

In some examples, the apparatus 200 may optionally include input/output circuitry 206 that may, in turn, be in communication with processor 202 to provide output to the user and, in some embodiments, to receive an indication of a user input. The input/output circuitry 206 may comprise a user interface circuitry and may include a display, which may comprise a web user interface, a mobile application, a client device, a kiosk, or the like. In some embodiments, the input/output circuitry 206 may also include a keyboard, a mouse, a joystick, a touch screen, touch areas, soft keys, a microphone, a speaker, or other input/output mechanisms. The processor and/or user interface circuitry comprising the processor may be configured to control one or more functions of one or more user interface elements through computer program instructions (*e.g.,* software and/or firmware) stored on a memory accessible to the processor (*e.g.,* memory 204, and/or the like).

It is also noted that all or some of the information discussed herein can be based on data that is received, generated and/or maintained by one or more components of apparatus 200. In some embodiments, one or more external systems (such as a remote cloud computing and/or data storage system) may also be leveraged to provide at least some of the functionality discussed herein.

In some embodiments, other elements of the apparatus 200 may provide or supplement the functionality of particular circuitry. For example, the processor 202 may provide processing functionality, the memory 204 may provide storage functionality, the communications circuitry 208 may provide network interface functionality, and the like. As will be appreciated, any such computer program instructions and/or other type of code may be loaded onto a computer, processor or other programmable apparatus's circuitry to produce a machine, such that the computer, processor or other programmable circuitry that execute the code on the machine creates the means for implementing various functions, including those described herein.

As described above and as will be appreciated based on this disclosure, embodiments of the present disclosure may be configured as methods, mobile devices, backend network devices, and the like. Accordingly, embodiments may comprise various means including entirely of hardware or any combination of software and hardware.

Referring now to FIG. 3, FIG. 4, FIG. 5, FIG. 6, FIG. 7A, FIG. 7B, FIG. 8, FIG. 9, and FIG. 10, example methods in accordance with various embodiments of the present disclosure are illustrated. In some examples, each block or step of the flowchart, and combinations of blocks and steps in the flowchart, may be implemented by various means such as hardware, circuitry and/or other devices associated with execution of software including one or more computer program instructions.

In some examples, one or more of the procedures described in the figures may be embodied by computer program instructions, which may be stored by a memory circuitry (such as a non-transitory memory) of an apparatus employing an embodiment of the present disclosure and executed by a processing circuitry (such as a processor) of the apparatus. These computer program instructions may direct the apparatus to function in a particular manner, such that the instructions stored in the memory circuitry produce an article of manufacture, the execution of which implements the function specified in the flowchart block(s). Further, the apparatus may comprise one or more other components, such as, for example, a communication circuitry and/or an input/output circuitry. Various components of the apparatus may be in electronic communication between and/or among each other to transmit data to and/or receive data from each other.

In some examples, embodiments may take the form of a computer program product on a non-transitory computer-readable storage medium storing computer-readable program instructions (*e.g.* computer software). Any suitable computer-readable storage medium may be utilized including non-transitory hard disks, CD-ROMs, flash memory, optical storage devices, and/or magnetic storage devices.

Referring now to FIG. 3, FIG. 4, and FIG. 5, example methods in accordance with some embodiments of the present disclosure are illustrated. In particular, these example methods may illustrate example embodiments of managing tenants of an integration and management system.

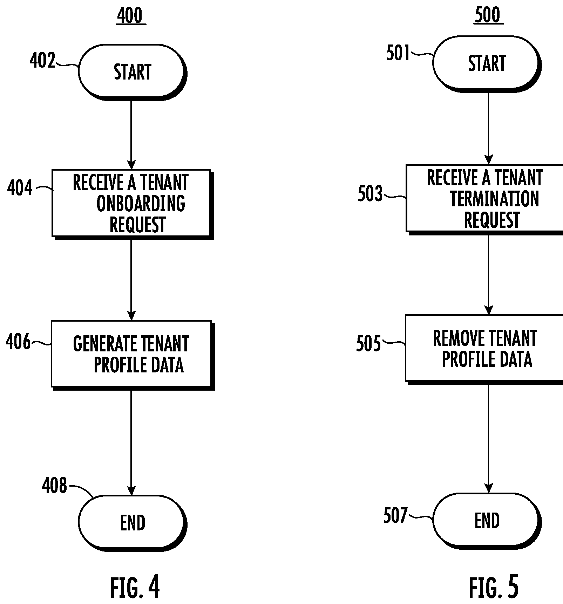

FIG. 3 illustrates an example system schema 300 within which the methods described in FIG. 4 and FIG. 5 may operate. In particular, the system may comprise an operation maintenance device 303, a communication network 305 and an integration and management system 307, similar to the operation maintenance device 103A, the communication network 105 and the integration and management system 107 described above in connection with FIG. 1.

In some examples, the operation maintenance device 303 may transmit one or more requests to the integration and management system 307, including, but not limited to, tenant onboarding requests and/or tenant termination requests. These electronic requests may be received by an API endpoint 317 of the integration and management server 309, similar to the API endpoint 117 described above in connection with FIG. 1.

In some examples, a tenant management API 325 may receive and process these electronic requests, and may communicate with a tenant registry 313. As described above, the tenant registry 313 may store tenant profile data 329, which may comprise at least one tenant identifier 331, at least one authorization indicator 333, and/or at least one quota indicator 335. Additional details of these operations are described at least in connection with FIG. 4 and FIG. 5 herein.

Referring now to FIG. 4, an example method 400 in accordance with some embodiments of the present disclosure is illustrated. In particular, the example method 400 may illustrate example embodiments of configuring a tenant for accessing the integration and management system. In some examples, the method 400 may be performed by a processing circuitry (for example, a processing circuitry of the integration and management server 109 described in connection with FIG. 1 and/or the processor 202 of the apparatus 200 described in connection with FIG. 2).

The method 400 starts at block 402.

At block 404, a processing circuitry (for example, a processing circuitry of the integration and management server 109 described in connection with FIG. 1 and/or the processor 202 of the apparatus 200 described in connection with FIG. 2) may receive a tenant onboarding request from an operation maintenance device.

In some examples, the tenant onboarding request may be in the form of an HTTP request. In some examples, the tenant onboarding request may comprise data that indicates a request to add a new tenant to the integration and management system so that one or more automated dataflow servers can process dataflow for the tenant.

In some examples, the tenant onboarding request may comprise at least one tenant device identifier that is associated with the new tenant, and/or may comprise a request to generate a tenant identifier. Additionally, or alternatively, the tenant onboarding request may comprise data related to the new tenant, including, but not limited to, an email address, a user name, a real name, and/or a graphical representation associated with the new tenant.

In some examples, the tenant onboarding request may be received via an API. For example, in the embodiment as shown in FIG. 3, the operation maintenance device 303 may transmit a tenant onboarding request to the tenant management API 325 of the API endpoint 317 via communication network 305.

For example, the following is an example programming code describing an example tenant onboarding request, substantially in the form of an HTTP message:

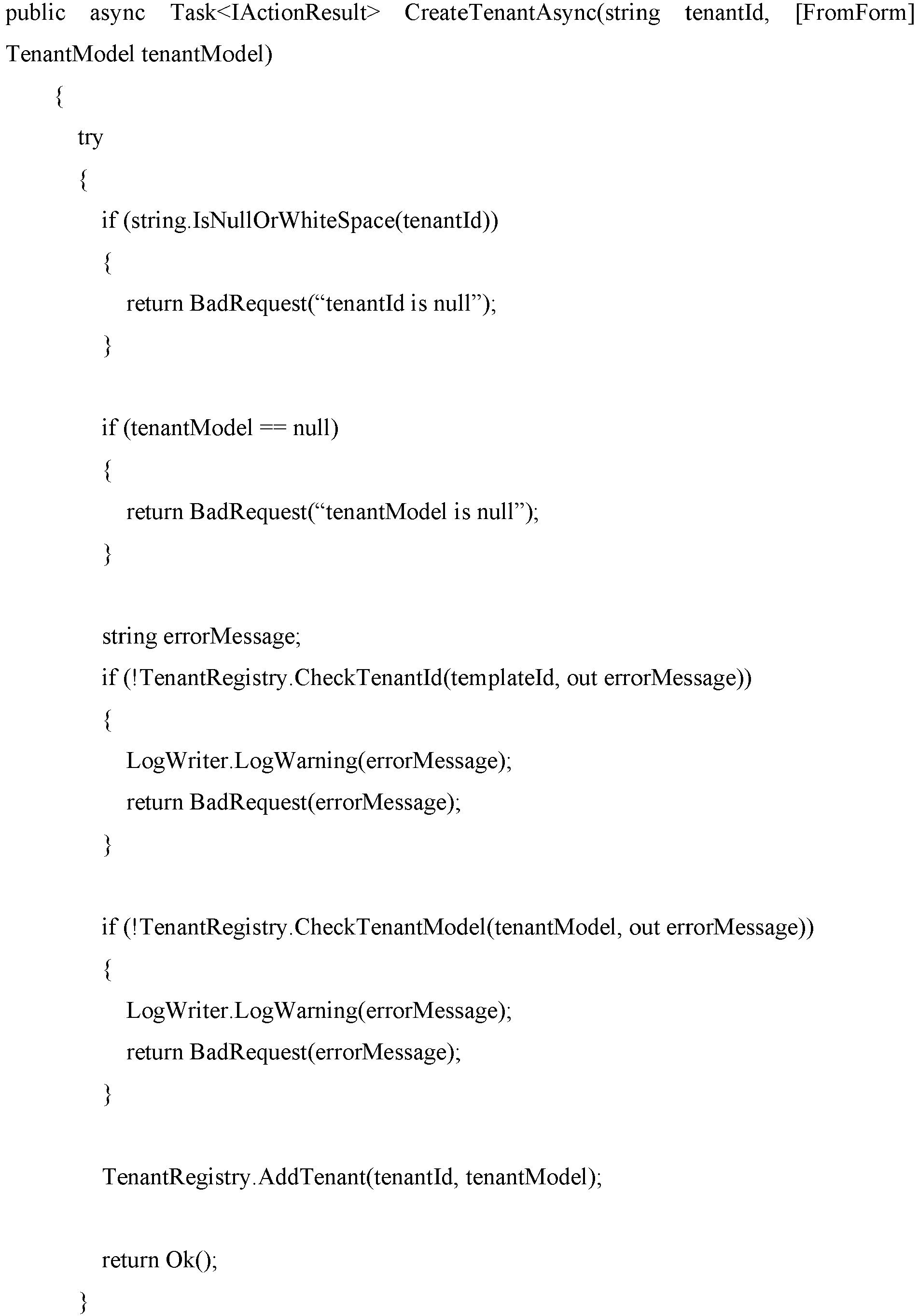

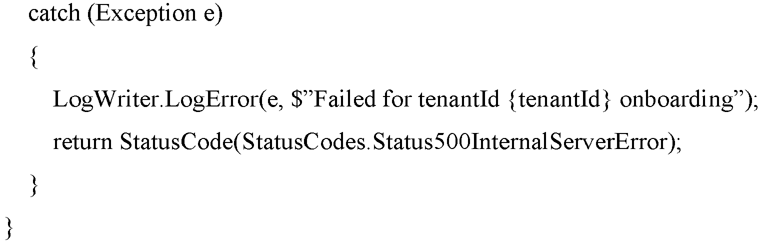

In the above example programming code, the example tenant onboarding request may comprise a request to generate a new tenant identifier in a tenant registry. If the tenant registry is not available (for example, offline), the processing circuitry may generate an error message.

At block 406, a processing circuitry (for example, a processing circuitry of the integration and management server 109 described in connection with FIG. 1 and/or the processor 202 of the apparatus 200 described in connection with FIG. 2) may generate tenant profile data in a tenant registry based on the tenant onboarding request.

In some examples, the tenant onboarding request may be processed via an API. For example, in the embodiment as shown in FIG. 3, the tenant management API 325 of the API endpoint 317 may communicate with the tenant registry 313 to generate the tenant profile data 329. Further, as shown in FIG. 3, the tenant profile data 329 may comprise a tenant identifier 331, an authorization indicator 333, and/or a quota indicator 335.

In some examples, the tenant identifier 331 may comprise an ASCII text, a pointer, a memory address, and the like, which may uniquely identify data related to the tenant that are stored in the tenant registry 313 and/or other registries associated with the integration and management system. In some examples, the tenant identifier 331 may be generated based on a tenant device identifier. For example, the tenant device identifier may be a numeric string that is unique to the tenant device, and the tenant identifier may be generated using a hush function of the numeric string.

In some examples, the authorization indicator 333 may comprise an ASCII text, a pointer, a memory address, and the like, which may represent at least one instance identifier associated with at least one instance of a plurality of instances. In some examples, the at least one instance identifier may correspond to the at least one instance that the tenant is authorized to access (*i.e.* "authorized instance(s)"). In other words, dataflow associated with the tenant is authorized to be deployed in the at least one instance.

In some examples, the authorization indicator 333 may be generated based on a data management policy associated with the integration and management system 307. For example, upon receiving the tenant onboarding request, the tenant management API 325 may retrieve a data management policy associated with instance(s) that are connected to the integration and management system 307, and may determine whether dataflow in any of the instances is in conflict with the new tenant identified in the tenant onboarding request. For example, the data management policy may indicate that a new dataflow associated with the new tenant should not be executed in an instance that also runs dataflow for another existing tenant.

If there is a conflict between the new dataflow and an existing dataflow in an instance, the tenant management API 325 may not include the corresponding instance identifier in the authorization indicator 333. If there is no conflict between the new dataflow and existing dataflow(s) in an instance, the tenant management API 325 may include the corresponding instance identifier in the authorization indicator 333.

In some examples, the quota indicator 335 may indicate a number of instances associated with the tenant identifier. For example, the number may be an upper limit number, which may indicate the number of instances that the integration and management system 307 can configure for the tenant. Additionally, or alternatively, the quota indicator 335 may indicate an existing number of instances that the integration and management system 307 has configured for the tenant.

Subsequent to generating the tenant profile data 329, the tenant management API 325 may store the tenant profile data 329 in the tenant registry 313, as shown in FIG. 3.

Referring back to FIG. 4, the method 400 ends at block 408.

Referring now to FIG. 5, an example method 500 in accordance with some embodiments of the present disclosure is illustrated. In particular, the example method 500 may illustrate example embodiments of removing a tenant from accessing the integration and management system. In some examples, the method 500 may be performed by a processing circuitry (for example, a processing circuitry of the integration and management server 109 described in connection with FIG. 1 and/or the processor 202 of the apparatus 200 described in connection with FIG. 2).

The method 500 starts at block 501.

At block 503, a processing circuitry (for example, a processing circuitry of the integration and management server 109 described in connection with FIG. 1 and/or the processor 202 of the apparatus 200 described in connection with FIG. 2) may receive a tenant termination request from an operation maintenance device.

In some examples, the tenant termination request may be in the form of an HTTP request. In some examples, the tenant termination request may comprise data that indicates a request to remove an existing tenant from accessing the integration and management system, and/or to stop processing dataflow(s) associated with the tenant in one or more automated dataflow servers.

In some examples, the tenant termination request may comprise a tenant identifier. As described above, the tenant identifier may comprise an ASCII text, a pointer, a memory address, and the like, which may uniquely identify data related to a tenant that is stored in the tenant registry and/or other registries.

In some examples, the tenant termination request may be received via an API. For example, in the embodiment as shown in FIG. 3, the operation maintenance device 303 may transmit a tenant termination request to the tenant management API 325 of the API endpoint 317 via communication network 305.

For example, the following is an example programming code describing an example tenant termination request, substantially in the form of an HTTP message:

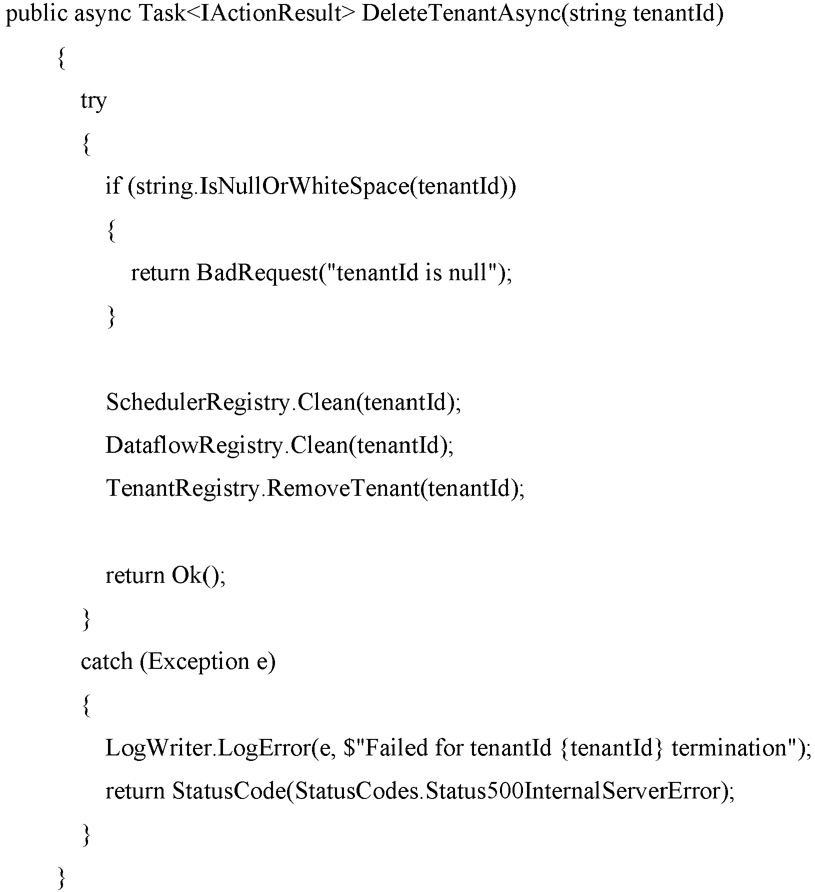

In the above example programming code, the example tenant termination request may comprise a request to remove the tenant identifier from a tenant registry, a scheduler registry, and/or a dataflow registry associated with the integration and management system.

At block 505, a processing circuitry (for example, a processing circuitry of the integration and management server 109 described in connection with FIG. 1 and/or the processor 202 of the apparatus 200 described in connection with FIG. 2) may remove tenant profile data corresponding to the tenant identifier from a tenant registry and/or other registries based on the tenant termination request.

In some examples, a tenant management API (such as the tenant management API 325 described above in connection with FIG. 3) may retrieve tenant profile data associated with the tenant in a tenant registry (such as the tenant registry 313 described above in connection with FIG. 3). Based on the tenant profile data, the tenant management API may identify one or more dataflows associated with the tenant, and may generate a request to an automated dataflow API integrator (such as the API integrator 119 described above in connection with FIG. 1) to cause one or more instances to exit dataflow(s) associated with the tenant.

In some examples, the tenant management API may remove the tenant profile data from the tenant registry and/or other registries associated with the integration and management system.

The method 500 ends at block 507.

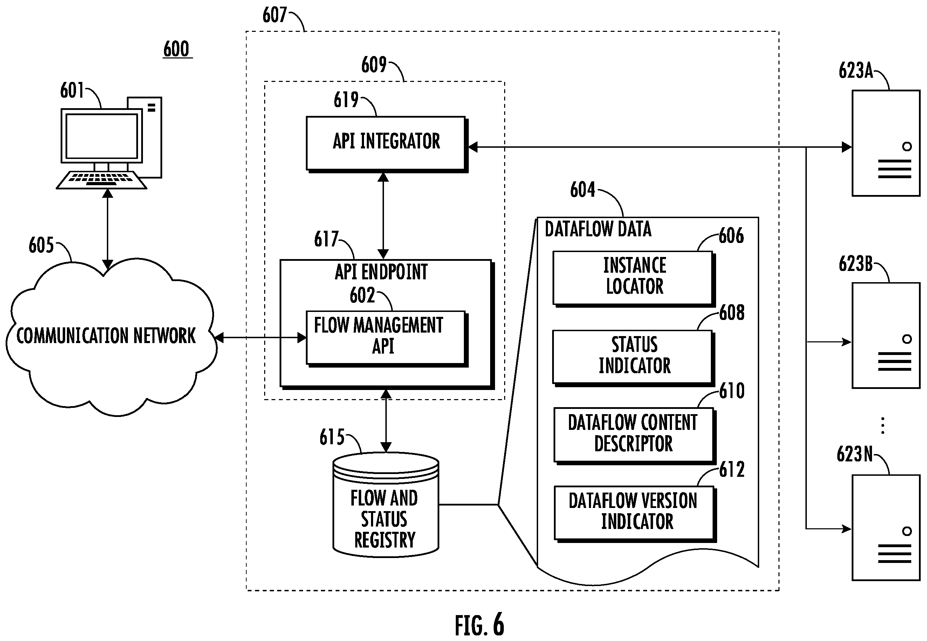

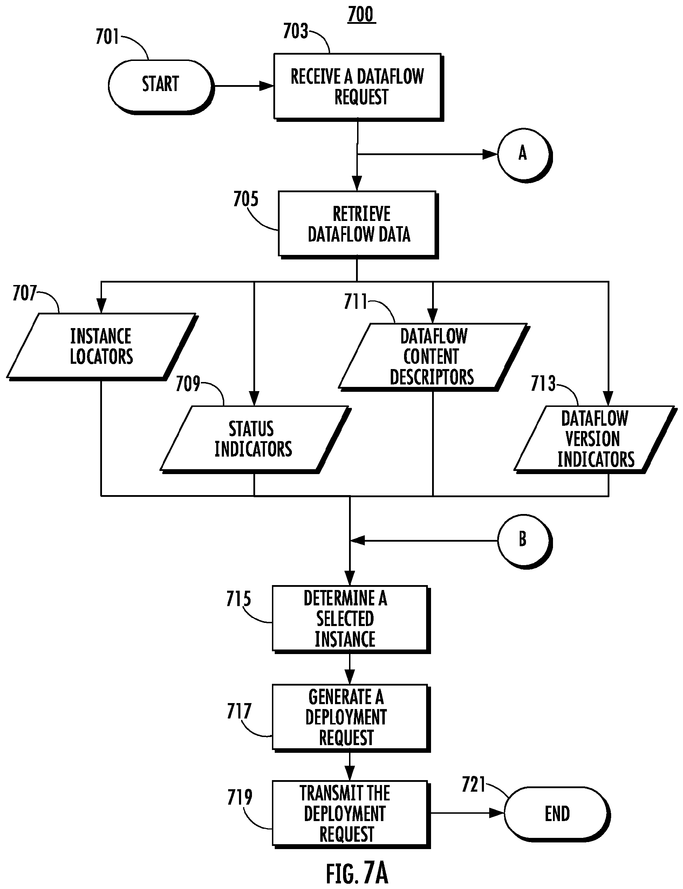

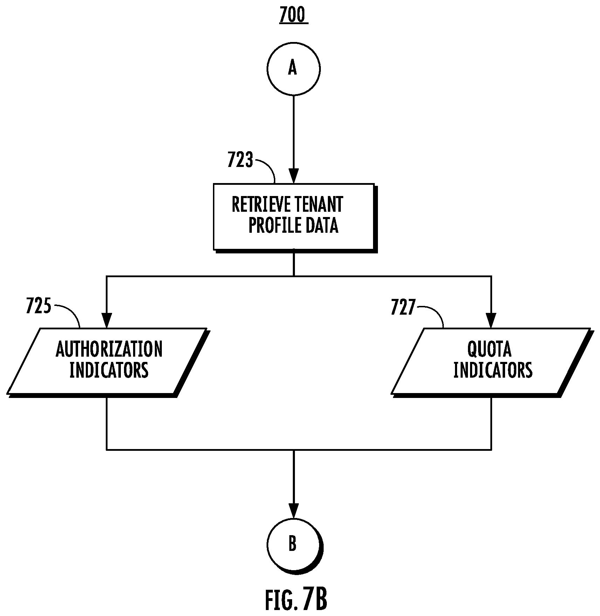

Referring now to FIG. 6, FIG. 7A, and FIG. 7B, example methods in accordance with some embodiments of the present disclosure are illustrated. In particular, these example methods may illustrate example embodiments of deploying one or more dataflows to one or more instances.

FIG. 6 illustrates an example system schema 600 within which the methods described in FIG. 7A and FIG. 7B may operate. In particular, the system may comprise a tenant device 601, a communication network 605, and an integration and management system 607, similar to the tenant device 101A, the communication network 105, and the integration and management system 107 described above in connection with FIG. 1.

In some examples, the tenant device 601 may transmit one or more requests to the integration and management system 607, including, but not limited to, dataflow requests. These electronic requests may be received by an API endpoint 617 of an integration and management server 609. In some examples, a flow management API 602 may receive and process these electronic requests, and may communicate with a flow and status registry 615. The flow and status registry 615 may store dataflow data 604, which may comprise at least one instance locator 606, at least one status indicator 608, at least one dataflow content descriptor 610, and/or at least one dataflow version indicator 612. In some examples, the flow management API 602 may communicate with an API integrator 619, which may in turn communicate with one or more automated dataflow servers 623A, 623B, . . . 623N. Additional details of these operations are described at least in connection with FIG. 7A and FIG. 7B herein.

Referring to FIG. 7A and FIG. 7B, an example method 700 in accordance with some embodiments of the present disclosure is illustrated. In particular, the example method 700 may illustrate example embodiments of deploying a dataflow in an instance. In some examples, the method 700 may be performed by a processing circuitry (for example, a processing circuitry of the integration and management server 109 described in connection with FIG. 1 and/or the processor 202 of the apparatus 200 described in connection with FIG. 2).

Referring now to FIG. 7A, the method 700 starts at block 701.

At block 703, a processing circuitry (for example, a processing circuitry of the integration and management server 109 described in connection with FIG. 1 and/or the processor 202 of the apparatus 200 described in connection with FIG. 2) may receive a dataflow request from a tenant device.

In some examples, the dataflow request may be in the form of an HTTP request. In some examples, the dataflow request may indicate an electronic request to deploy a dataflow in an instance, such as, but not limited to, a NiFi instance. For example, the dataflow request may comprise one or more parameters associated with the dataflow that is to be processed by an instance.

In some examples, the dataflow request may comprise at least one tenant identifier, which may uniquely identify the tenant who transmitted the dataflow request from a tenant device. Upon receiving the dataflow request, the integration and management system may perform authentication process to determine the identity of the tenant. For example, the integration and management server may retrieve tenant profile data from a tenant registry, similar to those described above.

In some examples, the dataflow request may be received via an API. For example, in the embodiment as shown in FIG. 6, the tenant device 601 may transmit dataflow request to the flow management API 602 of the API endpoint 617 via communication network 605.

For example, the following is an example programming code describing an example dataflow request, substantially in the form of an HTTP message:

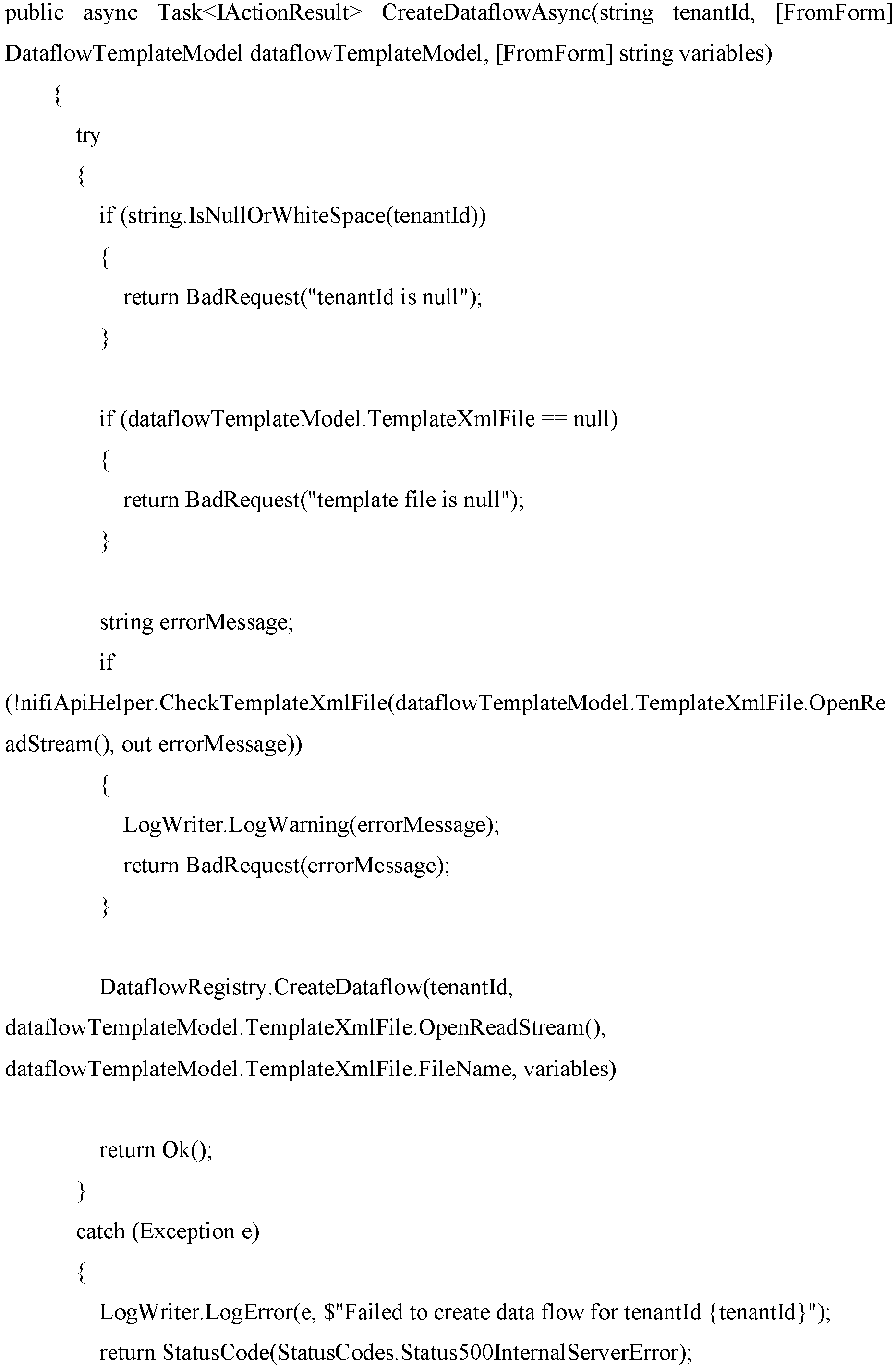

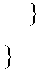

In the above example programming code, the example dataflow request may comprise a request for a dataflow associated with a tenant identifier.

Referring back to FIG. 7A, at block 705, a processing circuitry (for example, a processing circuitry of the integration and management server 109 described in connection with FIG. 1 and/or the processor 202 of the apparatus 200 described in connection with FIG. 2) may retrieve dataflow data associated with a plurality of instances from a flow and status registry.

In some examples, the dataflow data may comprise one or more instance locators 707 and/or one or more status indicators 709. In some examples, each of the status indicators 709 may be associated with and/or correspond to one of the instance locators 707.

In some examples, an instance locator of the one or more instance locators 707 may comprise a network address of one of a plurality of instances. For example, referring back to FIG. 6, the at least one instance locator 606 may comprise network address(es) for each of the instances within the automated dataflow servers 623A-623N. In some examples, the network address(es) may be based on the TCP/IP protocol. In some examples, the network address may be based on other protocol(s).

In some examples, a status indicator of the one or more status indicators 709 may comprise a network resource consumption rate associated with one of the plurality of instances. For example, referring back to FIG. 6, the at least one status indicator 608 may indicate a network resource consumption rate associated with each of the instances within the automated dataflow servers 623A-623N. In some examples, the network resource consumption rate may indicate a current read/write speed associated with the corresponding instance. Additionally, or alternatively, the network resource consumption rate may indicate the amount of data in and/or the amount of data out associated with the corresponding instance. Additionally, or alternatively, the network resource consumption rate may indicate the number of tasks that the corresponding instance is performing or assigned. Additionally, or alternatively, the network resource consumption rate may be in other format(s).

Additionally, or alternatively, the dataflow data may comprise one or more dataflow content descriptors 711 and/or one or more dataflow version indicators 713, as shown in FIG. 7.

The one or more dataflow content descriptors 711 may comprise an ASCII text, a pointer, a memory address, and the like, which may describe the dataflow content within the instances. For example, referring back to FIG. 6, the at least one dataflow content descriptor 610 may describe dataflow associated with the instances in the automated dataflow servers 623A-623N. In some examples, the dataflow content descriptors 711 may indicate a name of the dataflow. Additionally, or alternatively, the dataflow content descriptors 711 may include a short description of the dataflow.

The one or more dataflow version indicators 713 may comprise an ASCII text, a pointer, a memory address, and the like, which may indicate a version of each dataflow run by the instances. For example, referring back to FIG. 6, the at least one dataflow version indicator 612 may indicate a version of each dataflow run by the instances in the automated dataflow servers 623A-623N. In some examples, the dataflow version indicators 713 may indicate a unique version number. In some examples, the dataflow version indicators 713 may indicate a unique version name.

In some examples, the one or more instance locators 707, the one or more status indicators 709, the one or more dataflow content descriptors 711 and/or the dataflow version indicators 713 may provide a centralized data hub that may provide status of a plurality of instances. For each instance, an instance locator may indicate a network location of the instance, a status indicator may indicate a status of the instance, a dataflow content descriptor may indicate the content of dataflow run by the instance, and/or a dataflow version indicator may indicate the version of dataflow run by the instance. In some examples, based on the instance locator and the dataflow content descriptor, the integration and management system may determine the location and content of each dataflow. In some examples, based on the dataflow content descriptor and the dataflow version indicator, the integration and management system may determine the content and the version of each dataflow.

At block 715, a processing circuitry (for example, a processing circuitry of the integration and management server 109 described in connection with FIG. 1 and/or the processor 202 of the apparatus 200 described in connection with FIG. 2) may determine a selected instance from a plurality of instances based on the dataflow data.

In some examples, the processing circuitry may select the instance based on the one or more status indicators 709 of the dataflow data. As described above, the one or more status indicators 709 may indicate a current network resource consumption rate associated with each instance. In some examples, the processing circuitry may select an instance with the lowest network resource consumption rate. In some examples, the processing circuitry may select an instance based on its network resource consumption rate satisfying a predetermined threshold. For example, the selected instance may have a network resource consumption rate that is lower than a predetermine value.

Additionally, or alternatively, the processing circuitry may select the instance based on the one or more dataflow content descriptors 711 and/or the dataflow version indicators 713.

For example, the processing circuitry may determine information related to the to-be-deployed dataflow associated with the dataflow request, including, for example, the content and the version number. Referring to FIG. 6, the processing circuitry may retrieve the at least one dataflow content descriptor 610, and may determine whether the content of the to-be-deployed dataflow is the same or similar to the content of an existing dataflow in the automated dataflow servers 623A-623N based on, for example, the at least one dataflow content descriptor 610. If the content is the same or similar, the processing circuitry may retrieve the at least one dataflow version indicator 612 to determine the version of the existing dataflow. If the to-be-deployed dataflow is a higher version of the existing dataflow, then the processing circuitry may select the instance associated with the existing dataflow, and may cause the instance to replace the existing dataflow with the to-be-deployed dataflow from the dataflow request.

Referring back to FIG. 7A, at block 717, a processing circuitry (for example, a processing circuitry of the integration and management server 109 described in connection with FIG. 1 and/or the processor 202 of the apparatus 200 described in connection with FIG. 2) may convert the dataflow request to a deployment request based at least on the selected instance.

In some examples, the dataflow request may be converted via an automated dataflow API integrator. For example, referring to FIG. 6, the flow management API 602 may transfer the dataflow request to the API integrator 619. The API integrator 619 may then convert the dataflow request to a deployment request based on one or more APIs associated with the selected instance. In some examples, the deployment request may be in the form of an HTTP request, and may be in compliance with the API requirements for the automated dataflow servers 623A-623N.

For example, the following is an example programming code describing an example deployment request, substantially in the form of an HTTP message:

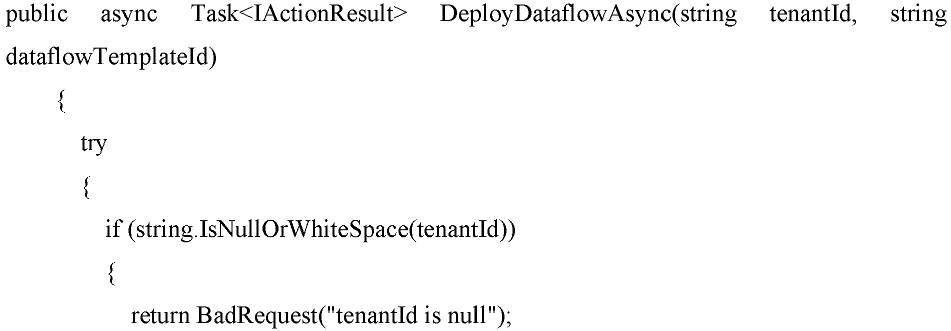

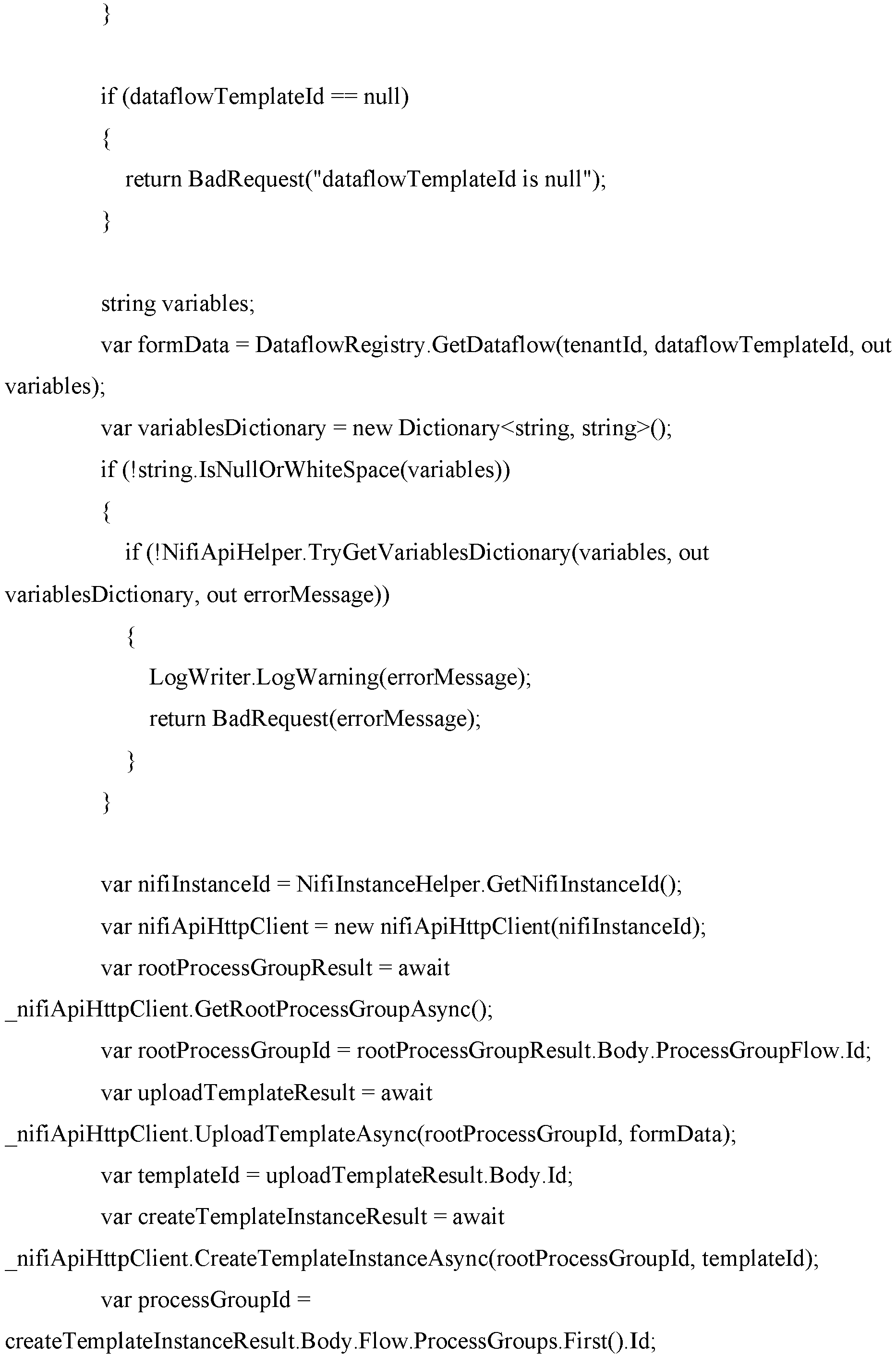

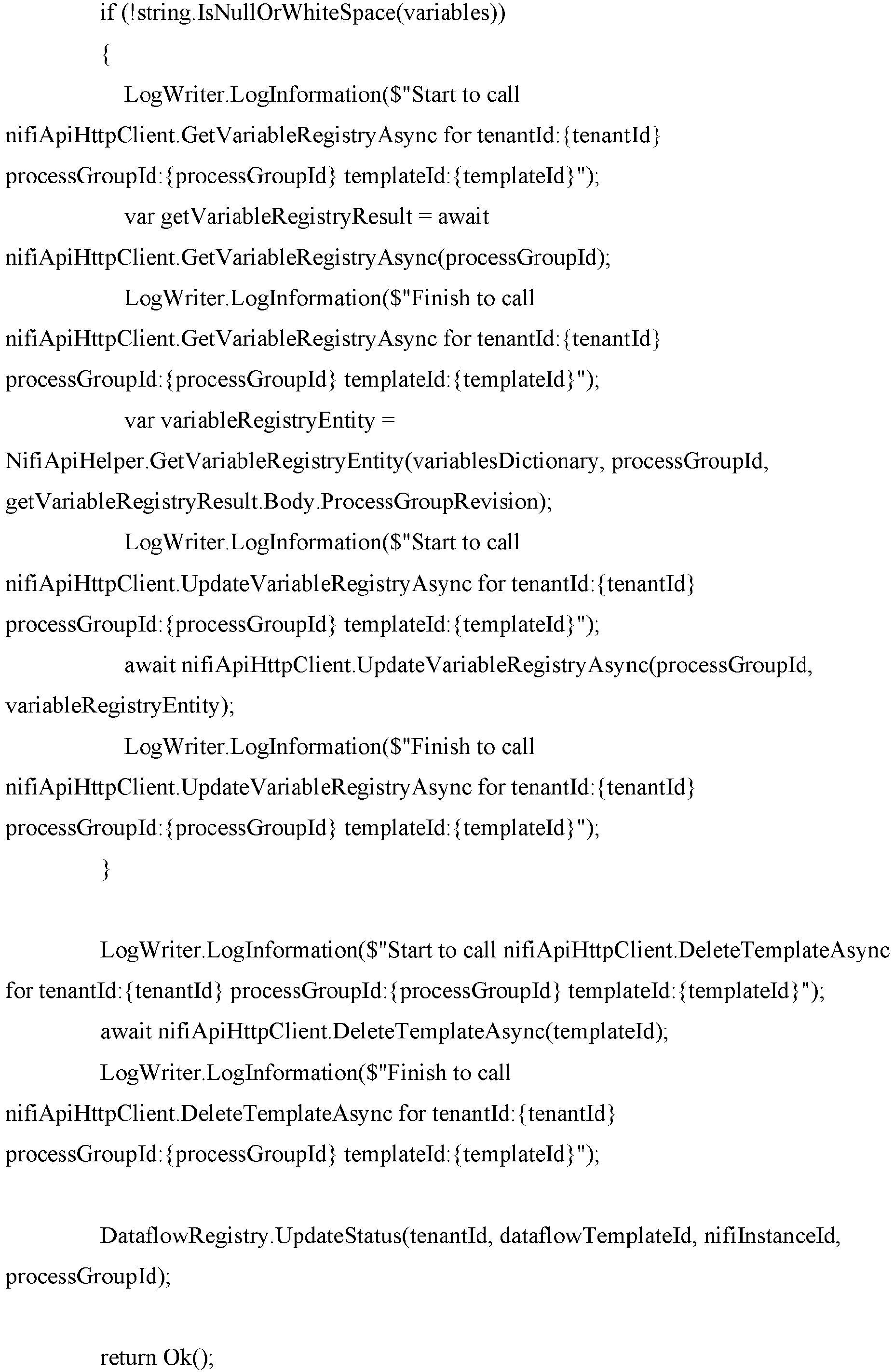

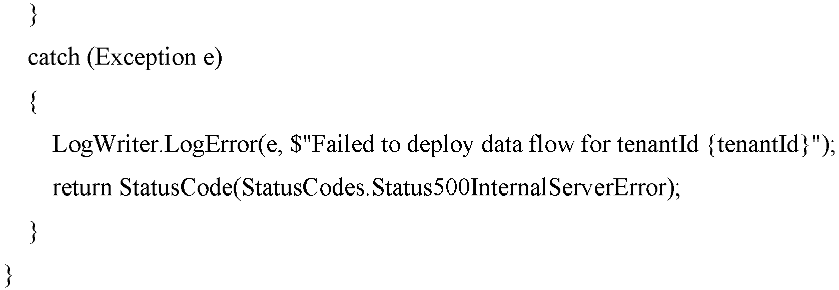

In the above example programming code, the example deployment request may comprise parameters (such as the template for the dataflow) for deploying the dataflow in an instance (such as a NiFi instance described above).

At block 719, a processing circuitry (for example, a processing circuitry of the integration and management server 109 described in connection with FIG. 1 and/or the processor 202 of the apparatus 200 described in connection with FIG. 2) may transmit the deployment request to the selected instance.

For example, referring to FIG. 6, the API integrator 619 may transmit the deployment request to an instance within one of the automated dataflow servers 623A-623N. The instance may be selected in accordance with the operations described herein. In some examples, the processing circuitry may transmit the deployment request to the selected instance based on the instance locator associated with the selected instance.

Referring back to FIG. 7A, the method 700 ends at block 721.

While FIG. 7A may illustrate that the processing circuitry may determine the selected instance based on the dataflow data, the processing circuitry may additionally, or alternatively, determine the selected instance based on the tenant profile data, examples of which are illustrated in FIG. 7B.

Referring now to FIG. 7B, at block 723, a processing circuitry (for example, a processing circuitry of the integration and management server 109 described in connection with FIG. 1 and/or the processor 202 of the apparatus 200 described in connection with FIG. 2) may retrieve tenant profile data from a tenant registry. In some examples, the tenant profile data may comprise one or more authorization indicators 725 and/or one or more quota indicators 727.

As described above, the authorization indicators 725 may indicate which automated dataflow server(s) that each tenant is authorized to access. In some examples, the processing circuitry may retrieve the corresponding tenant profile data based on the tenant identifier associated with the dataflow request, and may determine the corresponding authorization indicators associated with the tenant. In some examples, the authorization indicators may indicate one or more authorized instances that the tenant is authorized to access. In such examples, the processing circuitry may select an instance from the one or more authorized instances.

In some examples, the quota indicators 727 may indicate the dataflow limits assigned to each tenant. The processing circuitry may determine, for example, whether deploying an additional dataflow would exceed the limits. If so, the processing circuitry may generate a warning message to the tenant device (from which the dataflow request was transmitted). If not, the processing circuitry may select an instance accordingly.

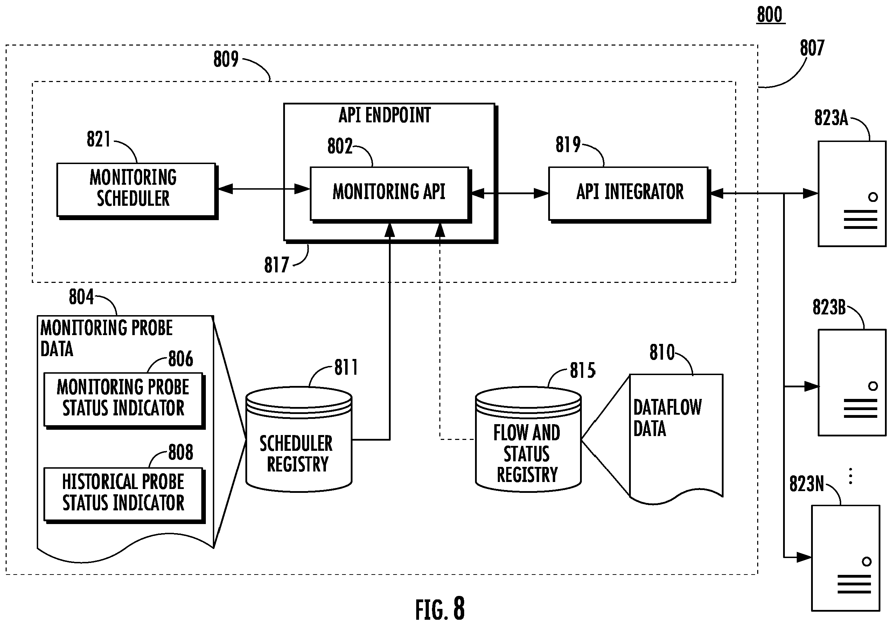

Referring now to FIG. 8, FIG. 9, and FIG. 10, example methods in accordance with some embodiments of the present disclosure are illustrated. In particular, these example methods may illustrate example embodiments of monitoring the status of automated dataflow server(s) and/or an integration and management system associated with the automated dataflow server(s).

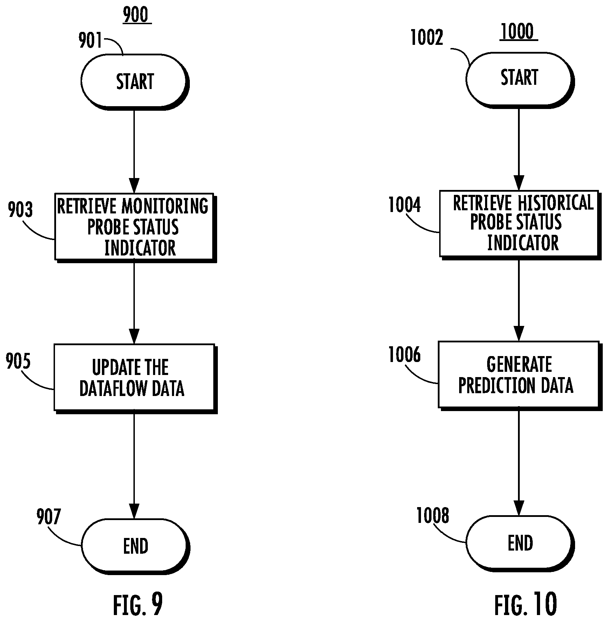

FIG. 8 illustrates an example system schema 800 within which the methods described in FIG. 9 and FIG. 10 may operate. In particular, an integration and management system 807 may be in communication with one or more automated dataflow servers 823A, 823B, ... 823N, similar to the integration and management system 107 and the one or more automated dataflow servers 123A-123N described above in connection with FIG. 1.

In some examples, the monitoring scheduler 821 of the integration and management server 809 may manage current monitoring probes associated with the automated dataflow servers 823A-823N. In some examples, the monitoring API 802 of the API endpoint 817 may retrieve monitoring probe data 804 from the scheduler registry 811, and may cause the dataflow data 810 in the flow and status registry 815 to update. In some examples, the monitoring probe data 804 may comprise at least one monitoring probe status indicator 806 and at least one historical probe status indicator 808. In some examples, the monitoring API 802 may communicate with an API integrator 819 to perform monitor probes on the instances in the automated dataflow servers 823A-823N. Additional details of these operations are described at least in connection with FIG. 9 and FIG. 10 herein.

Referring to FIG. 9, an example method 900 in accordance with some embodiments of the present disclosure is illustrated. In particular, the example method 900 may illustrate example embodiments of managing monitoring probes and updating dataflow data. In some examples, the method 900 may be performed by a processing circuitry (for example, a processing circuitry of the integration and management server 109 described in connection with FIG. 1 and/or the processor 202 of the apparatus 200 described in connection with FIG. 2).

The method 900 starts at block 901.

At block 903, a processing circuitry (for example, a processing circuitry of the integration and management server 109 described in connection with FIG. 1 and/or the processor 202 of the apparatus 200 described in connection with FIG. 2) may retrieve at least one monitoring probe status indicator from a scheduler registry.

In some examples, the at least one monitoring probe status indicator may comprise an ASCII text, a pointer, a memory address, and the like, and may indicate at least one current monitoring probe associated with a plurality of instances. For example, the at least one monitoring probe status indicator may indicate a starting time or a time interval for perform monitoring probe on the instances. Based on the starting time or the time interval, a monitoring API (such as the monitoring API 802 as shown in FIG. 8) may perform monitoring probes on the instances.

In some examples, the at least one monitoring probe status indicator may comprise information related to the performance of the instances. For example, the monitoring probe status indicator may indicate a current network resource consumption rate associated with an instance, the dataflow(s) that the instance is currently running, and/or the current network location of the instances.

In some examples, the processing circuitry may generate one or more electronic warning messages based on the at least one monitoring probe status indicator. For example, when the at least one monitoring probe status indicator indicates that an instance is running at or close to its maximum processing capacity, the processing circuitry may generate an electronic warning message, and may transmit the electronic warning message to an operation maintenance device.

At block 905, a processing circuitry (for example, a processing circuitry of the integration and management server 109 described in connection with FIG. 1 and/or the processor 202 of the apparatus 200 described in connection with FIG. 2) may update the dataflow data based on the at least one monitoring probe status indicator.

For example, the processing circuitry may update the status indicator of the dataflow data based on the current network resource consumption rate as identified by the monitoring probe status indicator. In some examples, the processing circuitry may update the dataflow content descriptor and/or the dataflow version indicator of the dataflow data based on the dataflow(s) that the instance is currently running as identified by the monitoring probe status indicator. In some examples, the processing circuitry may update the instance locator based on the current network location of the instance as identified by the monitoring probe status indicator.

The method 900 ends at block 907.

Referring to FIG. 10, an example method 1000 in accordance with some embodiments of the present disclosure is illustrated. In particular, the example method 1000 may illustrate example embodiments of generating prediction data. In some examples, the method 1000 may be performed by a processing circuitry (for example, a processing circuitry of the integration and management server 109 described in connection with FIG. 1 and/or the processor 202 of the apparatus 200 described in connection with FIG. 2).

The method 1000 starts at block 1002.

At block 1004, a processing circuitry (for example, a processing circuitry of the integration and management server 109 described in connection with FIG. 1 and/or the processor 202 of the apparatus 200 described in connection with FIG. 2) may retrieve at least one historical probe status indicator from a scheduler registry.

In some examples, the at least one historical probe status indicator may comprise an ASCII text, a pointer, a memory address, and the like, and may indicate at least one result of at least one historical monitoring probe associated with a plurality of instances. For example, the at least one historical probe status indicator may indicate a network resource consumption rate of each instance at various times when monitoring probes are performed.

At block 1006, a processing circuitry (for example, a processing circuitry of the integration and management server 109 described in connection with FIG. 1 and/or the processor 202 of the apparatus 200 described in connection with FIG. 2) may generate prediction data associated with the plurality of instances based on the at least one historical probe status indicator.

In some examples, the processing circuitry may implement machine learning algorithms to generate the prediction data. For example, the processing circuitry may implement an artificial neural network, and may generate prediction data that indicates a likely network consumption rate of the instances in the future. In some examples, other machine learning algorithms may be used.

The method 1000 ends at block 1008.

It is to be understood that the disclosure is not to be limited to the specific embodiments disclosed, and that modifications and other embodiments are intended to be included within the scope of the appended claims. Although specific terms are employed herein, they are used in a generic and descriptive sense only and not for purposes of limitation, unless described otherwise.

## Claims

1. A computer-implemented method, the method comprising:
receiving (703), via a communication network, a dataflow request provided by a tenant device, the dataflow request indicating an electronic request to deploy a dataflow;
retrieving (705), from a flow and status registry, data associated with a plurality of instances, the data comprising a plurality of instance locators (707) and a plurality of status indicators (709), associated with the plurality of instance locators, wherein a status indicator of the plurality of status indicators comprises a network resource consumption rate associated with one of the plurality of instances;
selecting (715) an instance from the plurality of instances based on the network resource consumption rate; and
translating (717) the dataflow request into a deployment request configured for the instance, the instance being a processing engine configured to process the dataflow.

2. The computer-implemented method of claim 1, the retrieving the data comprising retrieving automated dataflow data associated with a plurality of automated instances, the automated dataflow data comprising a plurality of automated status indicators, and the selecting the instance comprising selecting an automated instance from the plurality of automated instances based on the plurality of automated status indicators.

3. The computer-implemented method of claim 1, further comprising:
transmitting the deployment request to the instance.

4. The computer-implemented method of claim 1, an instance locator of the plurality of instance locators comprising a network address of one of the plurality of instances, and the selecting the instance comprises selecting the instance based on the network address.

5. The computer-implemented method of claim 1, the retrieving the dataflow data comprises retrieving at least one dataflow content descriptor and at least one dataflow version indicator, and the computer-implemented method further comprising:
determining, based at least on the at least one dataflow content descriptor and the at least one dataflow version indicator, whether the dataflow associated with the dataflow request is a different version of an existing dataflow in the plurality of instances.

6. The computer-implemented method of claim 5, further comprising:
determining that the dataflow is the different version of the existing dataflow; and
causing the instance to replace the existing dataflow with the dataflow.

7. The computer-implemented method of claim 1, further comprising:
receiving, from an operation maintenance device, a tenant onboarding request; and
based on the tenant onboarding request, generating tenant profile data in a tenant registry, the tenant profile data comprising a tenant identifier, an authorization indicator, and a quota indicator.

8. The computer-implemented method of claim 1, the translating comprising determining one or more parameters for deploying the dataflow in the instance, and the computer-implemented method further comprising:
transmitting the deployment request to the instance based on the one or more parameters.

9. The computer-implemented method of claim 1, the instance being an automated processing engine configured for automated processing of the dataflow.

10. The computer-implemented method of claim 1, the translating comprising translating the dataflow request into the deployment request based on one or more application programming interfaces associated with the instance.

11. The computer-implemented method of claim 1, the translating comprising translating the dataflow request into the deployment request based on at least one defined criterion for a server.

12. The computer-implemented method of claim 1, the translating comprising translating the dataflow request into a hypertext transfer protocol request for the instance.

13. An apparatus comprising at least one processor and at least one memory including computer program code, the at least one memory and the computer program code configured to, with the at least one processor, cause the apparatus to perform any one of the methods of claims 1-12.

14. A computer program product comprising at least one non-transitory computer-readable medium having computer-readable program instructions stored therein, the computer-readable program instructions comprising instructions, which when performed by an apparatus, are configured to cause the apparatus to at least perform any one of the methods of claims 1-12.

## Patentansprüche

1. Computerimplementiertes Verfahren, das Verfahren umfassend:
Empfangen (703) einer Datenflussanforderung, die von einer Tenant-Vorrichtung erstellt wird, über ein Kommunikationsnetzwerk, wobei die Datenflussanforderung eine elektronische Anforderung angibt, einen Datenfluss bereitzustellen;
Abrufen (705) von Daten, die einer Vielzahl von Instanzen zugehörig sind, aus einem Fluss- und Statusregister, wobei die Daten eine Vielzahl von Instanz-Lokatoren (707) und eine Vielzahl von Status-Indikatoren (709), die der Vielzahl von Instanz-Lokatoren zugehörig sind, umfassen, wobei ein Status-Indikator der Vielzahl von Status-Indikatoren eine Netzwerkressourcen-Verbrauchsrate umfasst, die einer der Vielzahl von Instanzen zugehörig ist;
Auswählen (715) einer Instanz aus der Vielzahl von Instanzen basierend auf der Netzwerkressourcen-Verbrauchsrate; und
Übersetzen (717) der Datenflussanforderung in eine Bereitstellungsanforderung, die für die Instanz konfiguriert ist, wobei die Instanz eine Verarbeitungs-Engine ist, die dazu konfiguriert ist, den Datenfluss zu verarbeiten.

2. Computerimplementiertes Verfahren nach Anspruch 1, wobei das Abrufen der Daten das Abrufen von automatisierten Datenflussdaten, die einer Vielzahl von automatisierten Instanzen zugehörig sind, umfasst, wobei die automatisierten Datenflussdaten eine Vielzahl von automatisierten Statusindikatoren umfassen, und das Auswählen der Instanz das Auswählen einer automatisierten Instanz aus der Vielzahl von automatisierten Instanzen basierend auf der Vielzahl von automatisierten Statusindikatoren umfasst.

3. Computerimplementiertes Verfahren nach Anspruch 1, ferner umfassend:
Senden der Bereitstellungsanforderung an die Instanz.

4. Computerimplementiertes Verfahren nach Anspruch 1, wobei ein Instanz-Lokator der Vielzahl von Instanz-Lokatoren eine Netzwerkadresse von einer der Vielzahl von Instanzen umfasst, und das Auswählen der Instanz das Auswählen der Instanz basierend auf der Netzwerkadresse umfasst.

5. Computerimplementiertes Verfahren nach Anspruch 1, wobei das Abrufen der Datenflussdaten das Abrufen mindestens eines Datenflussinhaltsdeskriptors und mindestens eines Datenflussversionsindikators umfasst, und wobei das computerimplementierte Verfahren ferner Folgendes umfasst:
Bestimmen, basierend mindestens auf dem mindestens einen Datenflussinhaltsdeskriptor und dem mindestens einen Datenflussversionsindikator, ob der Datenfluss, der der Datenflussanforderung zugehörig ist, eine unterschiedliche Version von einem bestehenden Datenfluss in der Vielzahl von Instanzen ist.

6. Computerimplementiertes Verfahren nach Anspruch 5, ferner umfassend:
Bestimmen, dass der Datenfluss die unterschiedliche Version des bestehenden Datenflusses ist; und
Veranlassen, dass die Instanz den bestehenden Datenfluss durch den Datenfluss ersetzt.

7. Computerimplementiertes Verfahren nach Anspruch 1, ferner umfassend:
Empfangen, von einer Betriebsunterhaltsvorrichtung, einer Tenant-Aufnahmeanforderung; und
basierend auf der Tenant-Aufnahmeanforderung, Erzeugen von Tenant-Profildaten in einem Tenant-Register, wobei die Tenant-Profildaten eine Tenant-Kennung, einen Autorisierungsindikator und einen Quotenindikator umfassen.

8. Computerimplementiertes Verfahren nach Anspruch 1, wobei das Übersetzen das Bestimmen von einem oder mehreren Parametern zum Bereitstellen des Datenflusses in der Instanz umfasst, und wobei das computerimplementierte Verfahren ferner Folgendes umfasst:
Senden der Bereitstellungsanforderung an die Instanz, basierend auf dem einen oder den mehreren Parametern.

9. Computerimplementiertes Verfahren nach Anspruch 1, wobei die Instanz eine automatisierte Verarbeitungs-Engine ist, die für eine automatisierte Verarbeitung des Datenflusses konfiguriert ist.

10. Computerimplementiertes Verfahren nach Anspruch 1, wobei das Übersetzen das Übersetzen der Datenflussanforderung in die Bereitstellungsanforderung basierend auf einer oder mehreren Anwendungsprogrammierungsschnittstellen, die der Instanz zugehörig sind, umfasst.

11. Computerimplementiertes Verfahren nach Anspruch 1, wobei das Übersetzen das Übersetzen der Datenflussanforderung in die Bereitstellungsanforderung basierend auf mindestens einem definierten Kriterium für einen Server umfasst.

12. Computerimplementiertes Verfahren nach Anspruch 1, wobei das Übersetzen das Übersetzen der Datenflussanforderung in eine Hypertext-Transfer-Protocol-Anforderung für die Instanz umfasst.

13. Einrichtung, umfassend mindestens einen Prozessor und mindestens einen Speicher, der einen Computerprogrammcode beinhaltet, wobei der mindestens eine Speicher und der Computerprogrammcode dazu konfiguriert sind, mit dem mindestens einen Prozessor die Einrichtung zu veranlassen, eines der Verfahren nach den Ansprüchen 1 bis 12 durchzuführen.

14. Computerprogrammprodukt, umfassend mindestens ein nichtflüchtiges computerlesbares Medium mit darin gespeicherten computerlesbaren Programmanweisungen, wobei die computerlesbaren Programmanweisungen Anweisungen umfassen, die, wenn sie von einer Einrichtung durchgeführt werden, dazu konfiguriert sind, die Einrichtung zu veranlassen, mindestens eines der Verfahren nach den Ansprüchen 1 bis 12 durchzuführen.

## Revendications

1. Procédé mis en œuvre par ordinateur, le procédé comprenant :
la réception (703), via un réseau de communication, d'une demande de flux de données fournie par un dispositif locataire, la demande de flux de données indiquant une demande électronique de déploiement d'un flux de données ;
la récupération (705), à partir d'un registre de flux et d'état, de données associées à une pluralité d'instances, les données comprenant une pluralité de localisateurs d'instances (707) et une pluralité d'indicateurs d'état (709), associés à la pluralité de localisateurs d'instances, dans lequel un indicateur d'état de la pluralité d'indicateurs d'état comprend un taux de consommation de ressources réseau associé à l'une de la pluralité d'instances ;
la sélection (715) d'une instance parmi la pluralité d'instances sur la base du taux de consommation de ressources réseau ; et
la traduction (717) de la demande de flux de données en une demande de déploiement configurée pour l'instance, l'instance étant un moteur de traitement configuré pour traiter le flux de données.

2. Procédé mis en œuvre par ordinateur selon la revendication 1, la récupération des données comprenant la récupération de données de flux de données automatisées associées à une pluralité d'instances automatisées, les données de flux de données automatisées comprenant une pluralité d'indicateurs d'état automatisés, et la sélection de l'instance comprenant la sélection d'une instance automatisée parmi la pluralité d'instances automatisées sur la base de la pluralité d'indicateurs d'état automatisés.

3. Procédé mis en œuvre par ordinateur selon la revendication 1, comprenant en outre :
la transmission de la demande de déploiement à l'instance.

4. Procédé mis en œuvre par ordinateur selon la revendication 1, un localisateur d'instance de la pluralité de localisateurs d'instance comprenant une adresse réseau d'une de la pluralité d'instances, et la sélection de l'instance comprend la sélection de l'instance sur la base de l'adresse réseau.

5. Procédé mis en œuvre par ordinateur selon la revendication 1, la récupération des données de flux de données comprend la récupération d'au moins un descripteur de contenu de flux de données et d'au moins un indicateur de version de flux de données, et le procédé mis en œuvre par ordinateur comprenant en outre :
le fait de déterminer, sur la base au moins de l'au moins un descripteur de contenu de flux de données et de l'au moins un indicateur de version de flux de données, si le flux de données associé à la demande de flux de données est une version différente d'un flux de données existant dans la pluralité d'instances.

6. Procédé mis en œuvre par ordinateur selon la revendication 5, comprenant en outre :
le fait de déterminer que le flux de données est la version différente du flux de données existant ; et
le fait d'amener l'instance à remplacer le flux de données existant par le flux de données.

7. Procédé mis en œuvre par ordinateur selon la revendication 1, comprenant en outre :
la réception, à partir d'un dispositif de maintenance opérationnelle, d'une demande d'intégration de locataire ; et
sur la base de la demande d'intégration du locataire, la génération de données de profil de locataire dans un registre de locataires, les données de profil de locataire comprenant un identifiant de locataire, un indicateur d'autorisation et un indicateur de quota.

8. Procédé mis en œuvre par ordinateur selon la revendication 1, la traduction comprenant la détermination d'un ou plusieurs paramètres pour déployer le flux de données dans l'instance, et le procédé mis en œuvre par ordinateur comprenant en outre :
la transmission de la demande de déploiement à l'instance sur la base des un ou plusieurs paramètres.

9. Procédé mis en œuvre par ordinateur selon la revendication 1, l'instance étant un moteur de traitement automatisé configuré pour le traitement automatisé du flux de données.

10. Procédé mis en œuvre par ordinateur selon la revendication 1, la traduction comprenant la traduction de la demande de flux de données en la demande de déploiement sur la base d'une ou plusieurs interfaces de programmation d'application associées à l'instance.

11. Procédé mis en œuvre par ordinateur selon la revendication 1, la traduction comprenant la traduction de la demande de flux de données en la demande de déploiement sur la base d'au moins un critère défini pour un serveur.

12. Procédé mis en œuvre par ordinateur selon la revendication 1, la traduction comprenant la traduction de la demande de flux de données en une demande de protocole de transfert hypertexte pour l'instance.

13. Appareil comprenant au moins un processeur et au moins une mémoire incluant un code de programme informatique, l'au moins une mémoire et le code de programme informatique étant configurés pour, avec l'au moins un processeur, amener l'appareil à exécuter l'un quelconque des procédés selon les revendications 1 à 12.

14. Produit de programme informatique comprenant au moins un support non transitoire lisible par ordinateur sur lequel sont stockées des instructions de programme lisibles par ordinateur, les instructions de programme lisibles par ordinateur comprenant des instructions qui, lorsqu'elles sont exécutées par un appareil, sont configurées pour amener l'appareil à au moins exécuter l'un quelconque des procédés selon les revendications 1 à 12.
